(19) Europäisches Patentamt / European Patent Office / Office européen des brevets

(11) **EP 4 597 202 A1**

(12) **EUROPEAN PATENT APPLICATION**
published in accordance with Art. 153(4) EPC

(43) Date of publication:
**06.08.2025 Bulletin 2025/32**

(21) Application number: **23871446.3**

(22) Date of filing: **01.08.2023**

(51) International Patent Classification (IPC):
*G02B 27/01* (2006.01)    *B60K 35/00* (2024.01)
*G02F 1/13357* (2006.01)    *G09F 9/00* (2006.01)

(52) Cooperative Patent Classification (CPC):
**B60K 35/00; G02B 27/01; G02F 1/1336; G09F 9/00**

(86) International application number:
**PCT/JP2023/028198**

(87) International publication number:
**WO 2024/070204 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.09.2022 JP 2022159077**

(71) Applicant: **Kyocera Corporation
Kyoto-shi, Kyoto 612-8501 (JP)**

(72) Inventors:
• **TANAKA, Yoshiki
Kyoto-shi, Kyoto 612-8501 (JP)**
• **MORISHITA, Katsuhiko
Kyoto-shi, Kyoto 612-8501 (JP)**
• **OZAWA, Ryosuke
Kyoto-shi, Kyoto 612-8501 (JP)**
• **EBISU, Yoichi
Kyoto-shi, Kyoto 612-8501 (JP)**
• **OGURA, Kenji
Kyoto-shi, Kyoto 612-8501 (JP)**
• **SHIMADA, Takashi
Kyoto-shi, Kyoto 612-8501 (JP)**
• **MOCHIZUKI, Yu
Kyoto-shi, Kyoto 612-8501 (JP)**

(74) Representative: **TBK
Bavariaring 4-6
80336 München (DE)**

(54) **VIRTUAL IMAGE DISPLAY DEVICE, MOVABLE BODY, VIRTUAL IMAGE DISPLAY DEVICE DRIVING METHOD, AND PROGRAM**

(57)    A virtual image display device includes a backlight, a display panel, an optical system, and a backlight controller. The backlight includes a plurality of light emitters and a light-emitting surface that can emit light from the plurality of light emitters. The display panel includes a display surface that displays an image with light emitted from the light-emitting surface. The optical system enlarges an image of the display surface and an image of the light-emitting surface by different enlargement factors to form a virtual image in a field of view of a user. The backlight controller performs local dimming control by switching each of the plurality of light emitters between an emissive state and a non-emissive state based on the image displayed on the display panel. The light-emitting surface is smaller than the display surface.

FIG. 1

**Description**

TECHNICAL FIELD

The present disclosure relates to a virtual image display device, a movable body, a method for driving the virtual image display device, and a program.

BACKGROUND OF INVENTION

A known virtual image display device is described in, for example, Patent Literature 1.

CITATION LIST

PATENT LITERATURE

Patent Literature 1: Japanese Unexamined Patent Application Publication No. 2020-112667

SUMMARY

In one embodiment of the present disclosure, a virtual image display device includes a backlight, a display panel, an optical system, and a backlight controller. The backlight includes a plurality of light emitters and a light-emitting surface configured to emit light from the plurality of light emitters. The display panel includes a display surface that displays an image with light emitted from the light-emitting surface. The optical system enlarges an image of the display surface and an image of the light-emitting surface by different enlargement factors to form a virtual image in a field of view of a user. The backlight controller performs local dimming control by switching each of the plurality of light emitters between an emissive state and a non-emissive state based on the image displayed on the display panel. The light-emitting surface is smaller than the display surface.

In another embodiment of the present disclosure, a virtual image display device includes a backlight, a display panel, an optical system, and a backlight controller. The backlight includes a plurality of light emitters and a light-emitting surface configured to emit light from the plurality of light emitters. The display panel includes a display surface that displays an image with light emitted from the light-emitting surface. The optical system enlarges an image of the display surface and an image of the light-emitting surface by different enlargement factors to form a virtual image in a field of view of a user. The backlight controller selects, in the light-emitting surface, an area to be formed as a virtual image having a same size as the image of the display surface in the field of view of the user. The backlight controller performs local dimming control by switching a light emitter corresponding to the selected area among the plurality of light emitters between an emissive state and a non-emissive state based on the image displayed on the display surface area.

In one embodiment of the present disclosure, a movable body includes the above virtual image display device and a windshield. The optical system includes a first reflector and a second reflector. The first reflector reflects the image of the display surface and the image of the light-emitting surface toward the second reflector. The second reflector reflects the image of the display surface and the image of the light-emitting surface reflected by the first reflector toward the field of view of the user. The windshield reflects the image light reflected by the first reflector toward an eye of the user.

In another embodiment of the present disclosure, a virtual image display device includes a backlight, a display panel, an optical system, and a backlight controller. The backlight includes a plurality of light emitters and a light-emitting surface configured to emit light from the plurality of light emitters. The display panel includes a display surface that displays an image with light emitted from the light-emitting surface. The optical system enlarges an image of the display surface and an image of the light-emitting surface by different enlargement factors to form a virtual image in a field of view of a user. The backlight controller generates a second image by deforming a first image to be displayed on the display panel based on the enlargement factors by which the optical system enlarges the image of the display surface and the image of the light-emitting surface and performs local dimming control by switching each of the plurality of light emitters between an emissive state and a non-emissive state based on the second image.

In another embodiment of the present disclosure, a virtual image display device includes a backlight, a display panel, an optical system, and a backlight controller. The backlight includes a plurality of light emitters and a light-emitting surface configured to emit light from the plurality of light emitters. The display panel includes a display surface that displays an image with light emitted from the light-emitting surface. The optical system enlarges an image of the display surface and an image of the light-emitting surface by different enlargement factors to form a virtual image in a field of view of a user. The backlight controller generates a second image to be displayed on the display panel by deforming a first image based on the enlargement factors by which the optical system enlarges the image of the display surface and the image of the light-emitting surface and performs local dimming control by switching each of the plurality of light emitters between an emissive state and a non-emissive state based on the first image.

In an aspect of the present disclosure, a method is for driving a virtual image display device. The virtual image display device includes a backlight, a display panel, and an optical system. The backlight includes a plurality of light emitters and a light-emitting surface configured to emit light from the plurality of light emitters. The display panel includes a display surface that displays an image with light emitted from the light-emitting surface. The optical system enlarges an image of the display surface and an image of the light-emitting surface by different enlargement factors to form a virtual image in a field of view of a user. The method includes generating a second image by deforming a first image to be displayed on the display panel based on the enlargement factors by which the optical system enlarges the image of the display surface and the image of the light-emitting surface, and performing local dimming control by switching each of the plurality of light emitters between an emissive state and a non-emissive state based on the second image.

In an aspect of the present disclosure, a method is for driving a virtual image display device. The virtual image display device includes a backlight, a display panel, and an optical system. The backlight includes a plurality of light emitters and a light-emitting surface configured to emit light from the plurality of light emitters. The display panel includes a display surface that displays an image with light emitted from the light-emitting surface. The optical system enlarges an image of the display surface and an image of the light-emitting surface by different enlargement factors to form a virtual image in a field of view of a user. The method includes generating a second image to be displayed on the display panel by deforming a first image based on the enlargement factors by which the optical system enlarges the image of the display surface and the image of the light-emitting surface, and performing local dimming control by switching each of the plurality of light emitters between an emissive state and a non-emissive state based on the first image.

In an aspect of the present disclosure, a program is executable by a virtual image display device including a backlight, a display panel, and an optical system. The backlight includes a plurality of light emitters and a light-emitting surface configured to emit light from the plurality of light emitters. The display panel includes a display surface that displays an image with light emitted from the light-emitting surface. The optical system enlarges an image of the display surface and an image of the light-emitting surface by different enlargement factors to form a virtual image in a field of view of a user. The program causes the virtual image display device to perform operations including generating a second image by deforming a first image to be displayed on the display panel based on the enlargement factors by which the optical system enlarges the image of the display surface and the image of the light-emitting surface, and performing local dimming control by switching each of the plurality of light emitters between an emissive state and a non-emissive state based on the second image.

In an aspect of the present disclosure, a program is executable by a virtual image display device including a backlight, a display panel, and an optical system. The backlight includes a plurality of light emitters and a light-emitting surface configured to emit light from the plurality of light emitters. The display panel includes a display surface that displays an image with light emitted from the light-emitting surface. The optical system enlarges an image of the display surface and an image of the light-emitting surface by different enlargement factors to form a virtual image in a field of view of a user. The program causes the virtual image display device to perform operations including generating a second image to be displayed on the display panel by deforming a first image based on the enlargement factors by which the optical system enlarges the image of the display surface and the image of the light-emitting surface, and performing local dimming control by switching each of the plurality of light emitters between an emissive state and a non-emissive state based on the first image.

BRIEF DESCRIPTION OF THE DRAWINGS

The objects, features, and advantages of the present disclosure will become more apparent from the following detailed description and the drawings.

FIG. 1 is a diagram of a virtual image display device according to one embodiment of the present disclosure.
FIG. 2 is a diagram describing an example manner of virtual images of a backlight and a display panel being viewed by a user viewing an image of the backlight and an image of the display panel through an optical system.
FIG. 3A is a front view of the backlight in the virtual image display device in FIG. 1.
FIG. 3B is a front view of the display panel in the virtual image display device in FIG. 1.
FIG. 4 is a diagram of an example display surface virtual image with deteriorated viewability resulting from parallax between virtual images.
FIG. 5 is a diagram of an example display surface virtual image viewed by the user of the virtual image display device in FIG. 1.
FIG. 6 is a diagram of a virtual image display device according to another embodiment of the present disclosure.
FIG. 7A is a front view of a backlight in the virtual image display device in FIG. 6.
FIG. 7B is a front view of a display panel in the virtual image display device in FIG. 6.
FIG. 8 is a diagram of an example display surface virtual image with deteriorated viewability resulting from parallax between virtual images.

FIG. 9 is a diagram of an example display surface virtual image viewed by a user of the virtual image display device in FIG. 6.

FIG. 10 is a diagram of a virtual image display device according to another embodiment of the present disclosure.

FIG. 11 is a diagram of an example display surface virtual image viewed by a user of the virtual image display device in FIG. 10.

FIG. 12 is a diagram of a movable body according to one embodiment of the present disclosure.

FIG. 13 is a flowchart of a method for driving a virtual image display device according to one embodiment of the present disclosure.

FIG. 14 is a diagram of an example first image.

FIG. 15 is a diagram of an example second image.

FIG. 16 is a diagram of multiple local dimming areas.

FIG. 17 is an example gray level histogram.

FIG. 18 is another example gray level histogram.

FIG. 19 is a diagram of light emitters to be in an emissive state and light emitters to be in a non-emissive state.

FIG. 20 is a diagram describing detection of peripheral light emitters.

FIG. 21 is a diagram describing detection of peripheral light emitters.

FIG. 22 is a diagram of a virtual image viewed by a user.

FIG. 23 is a diagram of an example second image.

FIG. 24 is a diagram of light emitters to be in the emissive state and light emitters to be in the non-emissive state.

FIG. 25 is a diagram of a virtual image viewed by a user.

FIG. 26 is a diagram of an example second image.

FIG. 27 is a diagram of light emitters to be in the emissive state and light emitters to be in the non-emissive state.

FIG. 28 is a diagram of a virtual image viewed by a user.

DESCRIPTION OF EMBODIMENTS

Various virtual image display devices that have been proposed allow a user to view a virtual image by reflecting image light emitted from a display with a reflector. For a display including a backlight and a liquid crystal panel, local dimming control over the backlight can reduce the power consumption of the display and allow the user to view a virtual image with higher contrast. However, such a virtual image display device naturally generates parallax between a virtual image of the liquid crystal panel (referred to as a display virtual image) and a virtual image of the backlight (referred to as a light source virtual image), thus deteriorating the viewability of the display virtual image viewed by the user. To reduce such deteriorated viewability of the display virtual image, for example, Patent Literature 1 describes a virtual image display device that estimates the gaze of a user and causes multiple light sources in the backlight to partly emit light based on the estimated gaze.

Known virtual image display devices are to be improved to reduce parallax between the display virtual image and the light source virtual image across the entire display virtual image.

One or more embodiments of the present disclosure will now be described in detail with reference to the drawings. The drawings used hereafter are schematic and are not necessarily drawn to scale relative to the actual size of each component in the drawings.

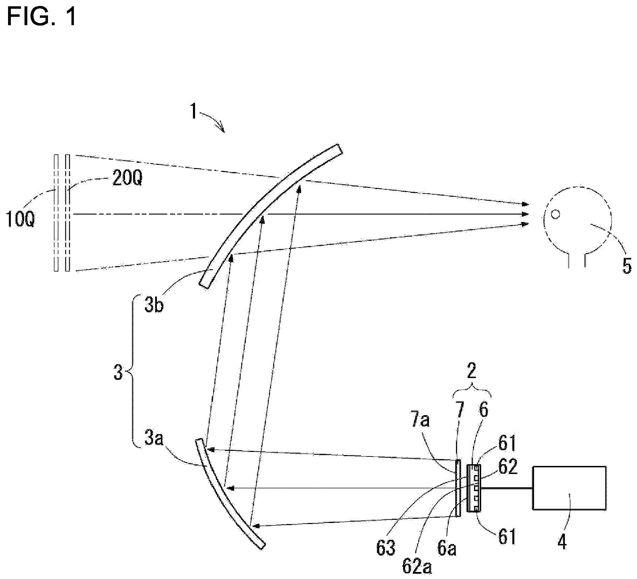

In one embodiment of the present disclosure, as illustrated in FIG. 1, a virtual image display device 1 includes a display 2, an optical system 3, and a backlight controller 4. The virtual image display device 1 allows a user 5 to view a virtual image. The virtual image display device 1 is also referred to as a head-up display (HUD). The virtual image display device 1 may be mounted on a movable body such as a vehicle, a vessel, or an aircraft. When the virtual image display device 1 is mounted on a movable body, the user 5 may be a driver, an operator, or a passenger of the movable body.

The display 2 displays an image to be projected in the field of view of the user 5. The display 2 may be a transmissive display device. The transmissive display device may be, for example, a liquid crystal device such as a liquid crystal display (LCD) including a backlight 6 and a display panel (liquid crystal panel) 7. The backlight 6 and the display panel 7 are arranged along an optical path of image light from the image displayed for the user 5. The backlight 6 is farther from the user 5 than the display panel 7.

The backlight 6 may be a direct backlight. The direct backlight 6 includes multiple light emitters 61 and a light-emitting surface 6a that can emit light from the multiple light emitters 61. The backlight 6 may include a base 62 and a diffuser plate 63. The base 62 may include a main surface 62a facing the display panel 7. The multiple light emitters 61 may be arranged two-dimensionally on the main surface 62a. The diffuser plate 63 may be located in front of the base 62 (left in FIG. 1) to cover the multiple light emitters 61. The diffuser plate 63 may diffuse light emitted from the multiple light emitters 61, allowing the backlight 6 to illuminate the display panel 7 planarly. The light-emitting surface 6a may be a surface of the diffuser plate 63 adjacent to the display panel 7 or the main surface 62a of the base 62.

Each of the light emitters 61 includes at least one light source. The light source may be a point light source such as a light-emitting diode (LED). The LED includes a mini-LED and a micro-LED.

The display panel 7 includes a display surface 7a. The display surface 7a is a surface for displaying an image in response to an image display signal, and can project the image toward the optical system 3 with light emitted from the light-emitting surface 6a of the backlight 6.

The display panel 7 may be a known liquid crystal panel. Examples of the known liquid crystal panel include an in-plane switching (IPS) panel, a fringe field switching (FFS) panel, a vertical alignment (VA) panel, and an electrically controlled birefringence (ECB) panel. The display panel 7 may include multiple liquid crystal display elements, two glass substrates sandwiching the multiple liquid crystal display elements, and a color filter. The display panel 7 is not limited to a liquid crystal panel and may be a microelectromechanical systems (MEMS) shutter display panel. In the example described below, the display panel 7 is a liquid crystal panel.

The backlight controller (hereafter simply referred to as a controller) 4 controls the backlight 6. The controller 4 switches each of the light emitters 61 between an emissive state and a non-emissive state. The controller 4 may control the emission luminance levels of the light emitters 61 in the emissive state based on image data of the image displayed on the display surface 7a. The controller 4 may control the emission luminance levels of the light emitters 61 in the emissive state based on the background luminance level in the field of view of the user 5.

In addition to controlling the backlight 6, the controller 4 may control the components of the virtual image display device 1. The components controlled by the controller 4 may include, for example, the display panel 7 and a signal generator that generates an image signal of the image displayed on the display panel 7. To perform local dimming control, the controller 4 may perform image processing such as enlargement, reduction, or luminance level analysis of an image to be displayed on the display panel 7. The controller 4 may be, for example, a processor. The controller 4 may include one or more processors. The processors may include a general-purpose processor that reads a specific program to perform a specific function, and a processor dedicated to specific processing. The dedicated processor may include an application-specific integrated circuit (ASIC). The processor may include a programmable logic device (PLD). The PLD may include a field-programmable gate array (FPGA). The controller 4 may be a system on a chip (SoC) or a system in a package (SiP) in which one or more processors cooperate. The controller 4 may include a storage to store various items of information or programs for operating the components of the virtual image display device 1. The storage may be, for example, a semiconductor memory. The storage may function as a work memory for the controller 4.

The optical system 3 is located on the optical path of image light emitted from the display 2 before reaching the eyes of the user 5. The optical system 3 projects image light emitted from the display 2 toward the eyes of the user 5 to form a virtual image in the eyes of the user 5. The optical system 3 may enlarge or reduce the image displayed on the display 2 to form an image in the eyes of the user 5. The optical system 3 includes a first optical member (also referred to as a first reflector) 3a and a second optical member (also referred to as a second reflector) 3b. The first reflector 3a reflects an image of the light-emitting surface 6a and an image of the display surface 7a toward the second reflector 3b. The second reflector 3b reflects the image of the light-emitting surface 6a and the image of the display surface 7a reflected by the first reflector 3a toward the eyes of the user 5. The optical system 3 may include three or more optical members or four or more optical members, instead of two optical members. The optical members may include a reflective member including a convex or concave mirror. The optical members may include a reflective member including a freeform mirror. The optical members may include a refractive member including a convex lens or a concave lens. The convex lens includes a biconvex lens, a plano-convex lens, and a convex meniscus lens. The concave lens includes a biconcave lens, a plano-concave lens, and a concave meniscus lens. The optical members may include various optical members other than a reflective member or a refractive member.

A virtual image 10Q of the image of the light-emitting surface 6a and a virtual image 20Q of the image of the display surface 7a are located in a direction in which two-dot-dash lines extend straight forward (left in FIG. 1) from the second optical member 3b that is closest to the user 5. The image of the light-emitting surface 6a refers to the image of the light-emitting surface 6a observed through the display panel 7 when the display 2 is viewed from a position in front of the display 2 (left in FIG. 1) along the optical path of image light. The image of the display surface 7a refers to the image of the display surface 7a observed when the display 2 is viewed from a position in front of the display 2 along the optical path of image light. The image of the display surface 7a may also be referred to as an image displayed on the display surface 7a. Hereafter, the image of the light-emitting surface 6a is also simply referred to as the light-emitting surface 6a. The image of the display surface 7a is also simply referred to as the display surface 7a. The virtual image 10Q is also referred to as a light-emitting surface virtual image. The virtual image 20Q is also referred to as a display surface virtual image. The display surface 7a has a size corresponding to the size of the maximum display area of the display panel 7, and is as large as a displayable active display area. The light-emitting surface 6a is as large as the maximum lighting area that allows emission of light from light sources based on the active display area of the display panel 7.

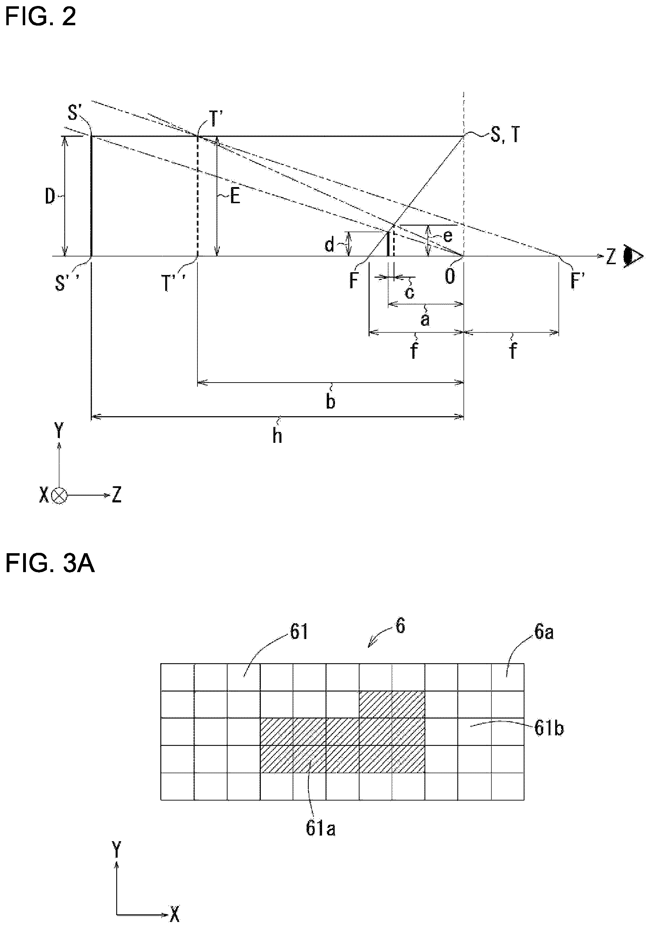

The virtual image 10Q and the virtual image 20Q are formed in the eyes of the user 5. The user 5 can view the virtual image 10Q and the virtual image 20Q. Referring to FIG. 2, the user 5 views the virtual image 10Q and the virtual image 20Q in the manner described below.

The backlight 6, the display panel 7, and the optical system 3 are arranged along a Z-axis. The optical system 3 including one or more optical members such as a lens or a mirror is regarded as a plane. The optical system 3 is assumed to be within a plane extending through a point O and perpendicular to the Z-axis. The center of the optical system 3 is assumed to be the point O. The optical axis of the optical system 3 is assumed to extend along the Z-axis. The optical system 3 is represented as a line segment on a Y-axis. The line segment representing the optical system 3 extends upward from the Z-axis for ease of explanation, but may extend downward as well. The optical system 3 may be symmetric about the Z-axis. The focal points of the optical system 3 are at a point F located apart from the point O in a negative Z-direction by f and at a point F' located apart from the point O in a positive Z-direction by f, where f is the focal length of the optical system 3. Light traveling radially from the point F toward the optical system 3 is refracted when passing through the optical system 3, and is assumed to travel in a direction parallel to the Z-axis in an area located in the positive Z-direction from the optical system 3. In other words, the optical system 3 converts light radially spreading from the point F to collimated light beams.

The light-emitting surface 6a is assumed to extend along a plane that is orthogonal to the Z-axis and apart from the optical system 3 as a plane orthogonal to the Z-axis by a (a < f) in the negative Z-direction. The light-emitting surface 6a is represented by a line segment with a length d parallel to the Y-axis.

The display surface 7a is assumed to extend along a plane that is orthogonal to the Z-axis and apart from the plane including the light-emitting surface 6a by c (c < a) in the positive Z-direction. The display surface 7a is represented by a line segment with a length e parallel to the Y-axis.

Two straight lines connecting the point F and the two ends of the line segment representing the light-emitting surface 6a intersect with the line segment representing the optical system 3 at the point O and at a point S. In other words, the line segment corresponding to the light-emitting surface 6a is enlarged to a line segment OS when viewed through the optical system 3 from a position in the positive Z-direction.

A straight line connecting the point O and the line segment representing the light-emitting surface 6a at its end point opposite to the end point on the Z-axis intersects with a straight line extending through the point S parallel to the Z-axis at a point S'. A perpendicular line from the point S' to the Z-axis intersects with the Z-axis at a point S". A line segment S'S" represents the virtual image 10Q of the light-emitting surface 6a. The distance between the point O and the point S" is h, and h = a × f/(f - a). In other words, for the user 5 viewing the light-emitting surface 6a through the optical system 3, the virtual image 10Q appears apart from the point O by h in the negative Z-direction. The line segment S'S" has a length D equal to the length of the line segment OS. The length D of the line segment S'S" is expressed by Formula 1 below.

$$D = f \times d/(f - a) \qquad (1)$$

Two straight lines connecting the point F and the two ends of the line segment representing the display surface 7a intersect with the line segment representing the optical system 3 at the point O and at a point T. In other words, the line segment corresponding to the display surface 7a is enlarged to a line segment OT when viewed through the optical system 3 from a position in the positive Z-direction.

A straight line connecting the point O and the line segment representing the display surface 7a at its end point opposite to the end point on the Z-axis intersects with a straight line extending through the point T parallel to the Z-axis at a point T'. A perpendicular line from the point T' to the Z-axis intersects with the Z-axis at a point T". A line segment T'T" represents the virtual image 20Q of the display surface 7a. The distance between the point O and the point T" is b, and b = (a - c) × f/(f - a + c). In other words, for the user 5 viewing the display surface 7a through the optical system 3, the virtual image 20Q appears apart from the point O by b in the negative Z-direction. The line segment T'T" has a length equal to the length of the line segment OT. A length E of the line segment T'T" is expressed by Formula 2 below.

$$E = f \times e/(f - a + c) \qquad (2)$$

As indicated by Formulas 1 and 2, an enlargement factor for the light-emitting surface 6a (in other words, the scale of the virtual image 10Q to the light-emitting surface 6a) $\alpha$ and an enlargement factor for the display surface 7a (in other words, the scale of the virtual image 20Q to the display surface 7a) $\beta$ are expressed by Formulas 3 and 4 below.

$$\alpha = f/(f - a) \qquad (3)$$

$$\beta = f/(f - a + c) \qquad (4)$$

As indicated by Formulas 3 and 4, the enlargement factor $\alpha$ for the light-emitting surface 6a differs from the enlargement factor $\beta$ for the display surface 7a. Thus, when the length d of the light-emitting surface 6a is equal to the length e of the display surface 7a, the virtual images 10Q and 20Q have different sizes. As indicated by Formulas 1 and 2, the length D of the virtual image 10Q parallel to the Y-axis may be equal to the length E of the virtual image 20Q parallel to the Y-axis when the length d of the light-emitting surface 6a satisfies d = e × (f - a)/(f - a + c).

The light-emitting surface 6a and the display surface 7a are also enlarged in the X-direction, in addition to in the Y-direction. The enlargement factor for the light-emitting surface 6a in the X-direction may differ from the enlargement factor α for the light-emitting surface 6a in the Y-direction. The enlargement factor for the display surface 7a in the X-direction may differ from the enlargement factor β for the display surface 7a in the Y-direction.

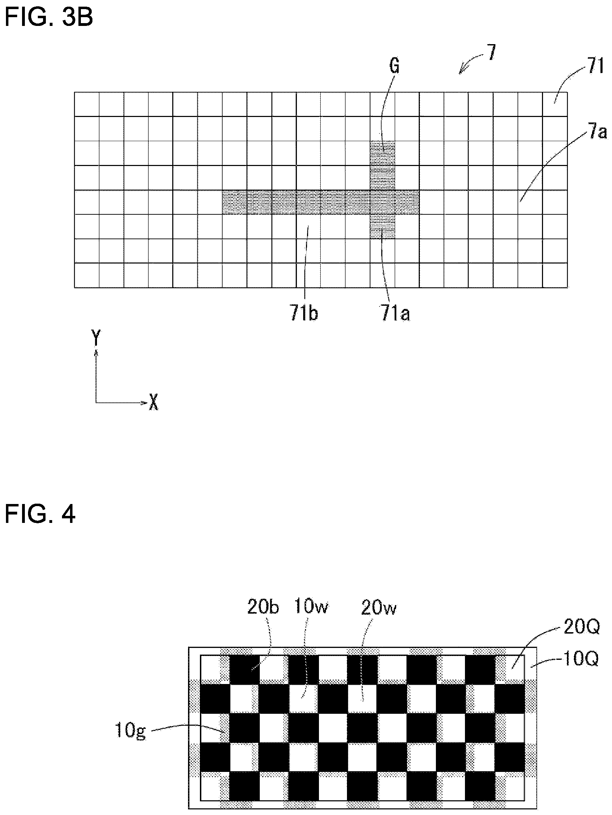

An example of local dimming control performed by the controller 4 will now be described with reference to FIGs. 3A and 3B. FIG. 3A is a front view of the backlight 6 when the display 2 is viewed along the optical path of image light from a position in front of the display 2 (left in FIG. 1). FIG. 3B is a front view of the display panel 7 when the display 2 is viewed along the optical path of image light from a position in front of the display 2. The light-emitting surface 6a and the display surface 7a may be rectangular. The light-emitting surface 6a is smaller than the display surface 7a in size (lengths of the long side and the short side). The shape of the light-emitting surface 6a may or may not be similar to the shape of the display surface 7a. The shapes of the light-emitting surface 6a and the display surface 7a may not be similar to each other when the scale α of the virtual image 10Q to the light-emitting surface 6a and the scale β of the virtual image 20Q to the display surface 7a are different in the X-direction and in the Y-direction. Note that, in local dimming control, an area of the backlight 6 overlapping the display surface 7a is divided into multiple blocks, and the luminance levels of the respective blocks are independently controlled. For example, when a specific block in the display surface 7a displays a dark image, a corresponding block in the backlight is controlled to have a lower luminance level to display a still darker image. The local dimming control thus improves the display performance of the virtual image display device and improves contrast.

As illustrated in FIG. 3A, the backlight 6 may include the multiple light emitters 61 arranged in a grid. The squares arranged in a grid correspond to the blocks described above. The light emitters 61 may be arranged in the X-direction and in the Y-direction at a predetermined pitch. The X-direction is also referred to as a horizontal direction or a first direction. The Y-direction is also referred to as a vertical direction or a second direction. As illustrated in FIG. 3B, the display panel 7 includes multiple pixels 71. Each of the pixels 71 may include multiple subpixels. Each of the pixels 71 may include, for example, three subpixels for displaying red, green, and blue. Each of the pixels 71 may include two subpixels or four or more subpixels, instead of three subpixels. The multiple pixels 71 may be arranged in a grid. The grid axes for indicating the arrangement of the pixels 71 are assumed to be the X-axis and the Y-axis. The pixels 71 may be arranged in the X-direction and in the Y-direction at a predetermined pitch. The light emitters 61 and the pixels 71 may be arranged in the X-direction and in the Y-direction at the same pitch or at different pitches.

The user 5 views an image G displayed on the display surface 7a as a virtual image superimposed on the scenery outside the movable body. The image G may be a letter or a graphic indicating, for example, the state (e.g., speed and orientation) of the movable body and navigation information (e.g., lane guidance, navigation guidance, inter-vehicle alert, or pedestrian detection). A portion of the display surface 7a is set as a display portion of the image G. For pixels (also referred to as display pixels) 71a corresponding to the display portion, the transmittances of the liquid crystal display elements are set to predetermined values, and the image is displayed with light emitted from the light-emitting surface 6a. In other words, the display pixels 71a corresponding to the display portion emit, as image light, light emitted from the light-emitting surface 6a and modulated by the liquid crystal display elements. A portion of the display surface 7a different from the display portion is set as a background portion, which substantially displays nothing. For pixels (also referred to as non-display pixels) 71b corresponding to the background portion, the transmittances of the corresponding liquid crystal display elements are set to 0% or values close to 0% to block light emitted from the light-emitting surface 6a.

In the local dimming control, the multiple light emitters 61 in the backlight 6 include light emitters 61 corresponding to the display pixels 71a that are in the emissive state and light emitters 61 corresponding to the non-display pixels 71b that are in the non-emissive state. When the optical system 3 enlarges the light-emitting surface 6a and the display surface 7a by the same enlargement factor and forms the virtual image 10Q and the virtual image 20Q at the same position, the user 5 can view a display surface virtual image with less deteriorated viewability, with the light emitters 61 overlapping the display pixels 71a as viewed from the front being in the emissive state and the light emitters 61 not overlapping the display pixels 71a as viewed from the front being in the non-emissive state. However, as described above, the optical system 3 enlarges the light-emitting surface 6a and the display surface 7a by different enlargement factors and forms the virtual image 10Q and the virtual image 20Q at different positions. Thus, when the light emitters 61 overlapping the display pixels 71a as viewed from the front are in the emissive state and the light emitters 61 not overlapping the display pixels 71a as viewed from the front are in the non-emissive state, parallax is generated between the virtual image 10Q of the light-emitting surface 6a and the virtual image 20Q of the display surface 7a (hereafter also referred to as parallax between the virtual images) in the field of view of the user 5. This causes deteriorated viewability in the virtual image 20Q.

FIG. 4 is a diagram of an example of the virtual image 20Q with deteriorated viewability resulting from parallax between the virtual images. In FIG. 4, the image G is a black-and-white checkerboard pattern for ease of illustration. FIG. 4 illustrates the virtual image 10Q of the light-emitting surface 6a in addition to the virtual image 20Q of the display surface 7a. In the virtual image 20Q illustrated in FIG. 4, white portions 20w are virtual images of the display pixels 71a, and black portions 20b are virtual images of the non-display pixels 71b. In the virtual image 10Q illustrated in FIG. 4, white portions 10w are virtual images of the light emitters 61 in the emissive state, and gray portions 10g are virtual images of the light emitters 61 in the non-emissive state. As illustrated in FIG. 4, the parallax between the virtual images may cause overlapping of the virtual images of the display pixels 71a with the virtual images of the light emitters 61 in the non-emissive state or overlapping of the virtual images of the non-display pixels 71b with the virtual images of the light emitters 61 in the emissive state. This causes deteriorated viewability in the virtual image 20Q. As illustrated in FIG. 4, the parallax between the virtual images is not uniform across the entire virtual image 20Q. The parallax is smaller in a middle portion of the virtual image 20Q and is larger at a peripheral portion of the virtual image 20Q. The parallax between the virtual images has different displacement in the horizontal direction (the horizontal direction in FIG. 4) and in the vertical direction (the up-down direction in FIG. 4). Estimating the gaze of the user 5 can reduce the parallax between the virtual images in a portion near the center of the estimated gaze. However, reducing the parallax between the virtual images across the entire virtual image 20Q is limited by the processing load on the virtual image display device.

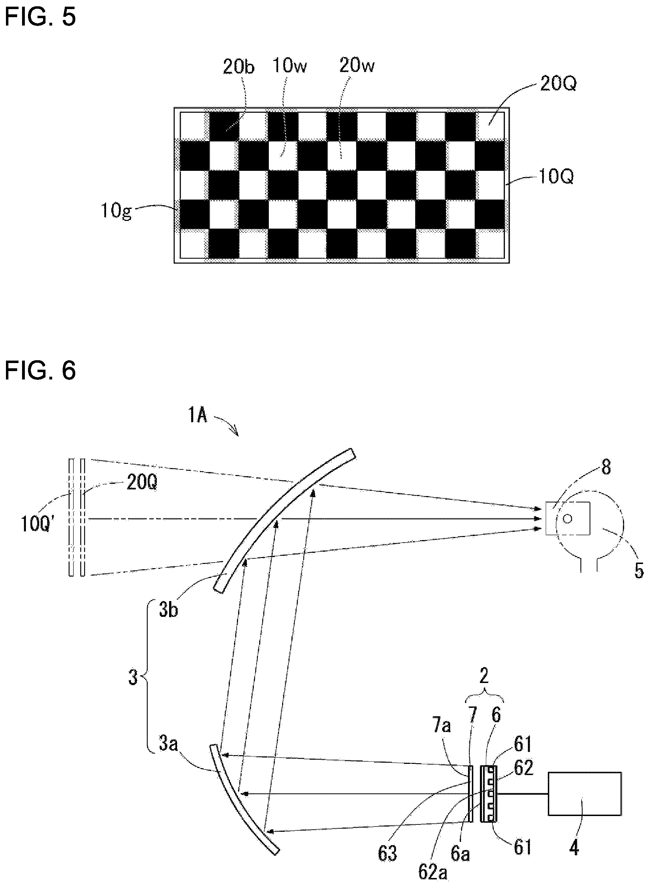

In the virtual image display device 1 according to the present embodiment, the light-emitting surface 6a is smaller than the display surface 7a. The light-emitting surface 6a is set to be smaller than the display surface 7a based on the enlargement factor $\alpha$ for the light-emitting surface 6a and the enlargement factor $\beta$ for the display surface 7a to cause the virtual image 10Q to have the same size as the virtual image 20Q. The controller 4 switches each of the multiple light emitters 61 between the emissive state and the non-emissive state based on the image data of the image G displayed on the display surface 7a, the enlargement factor $\alpha$ for the light-emitting surface 6a, and the enlargement factor $\beta$ for the display surface 7a. When, for example, the light-emitting surface 6a illustrated in FIG. 3A is enlarged to match the display surface 7a illustrated in FIG. 3B, the controller 4 may cause the light emitters 61a overlapping the display pixels 71a as viewed from the front to be in the emissive state and the light emitters 61b not overlapping the display pixels 71a as viewed from the front to be in the non-emissive state. The virtual image display device 1 can thus cause the virtual image 10Q of the light-emitting surface 6a to have substantially the same size as the virtual image 20Q of the display surface 7a. FIG. 5 is a diagram of an example of the virtual image 10Q and the virtual image 20Q viewed by the user 5 of the virtual image display device 1. In FIG. 5, the image G is a black-and-white checkerboard pattern as in FIG. 4. The reference numerals in FIG. 5 are the same as or similar to those in FIG. 4. As illustrated in FIG. 5, the virtual image display device 1 can reduce the parallax between virtual images across the entire virtual image 20Q and allows the user 5 to view the virtual image 20Q with less deteriorated viewability.

The controller 4 may cause, for example, the light emitters 61 corresponding to a part of the virtual image 10Q overlapping the virtual images of the display pixels 71a to be in the emissive state and the light emitters 61 corresponding to a part of the virtual image 10Q not overlapping the virtual images of the display pixels 71a to be in the non-emissive state. This can effectively reduce the parallax between the virtual images across the entire virtual image 20Q, and thus allows the user 5 to view the virtual image 20Q with still less deteriorated viewability.

A virtual image display device according to another embodiment of the present disclosure will now be described. In the present embodiment, a virtual image display device 1A has the same structure as or a similar structure to the virtual image display device 1 in the above embodiment except the display 2 and the controller 4. The same or similar components will not be described in detail.

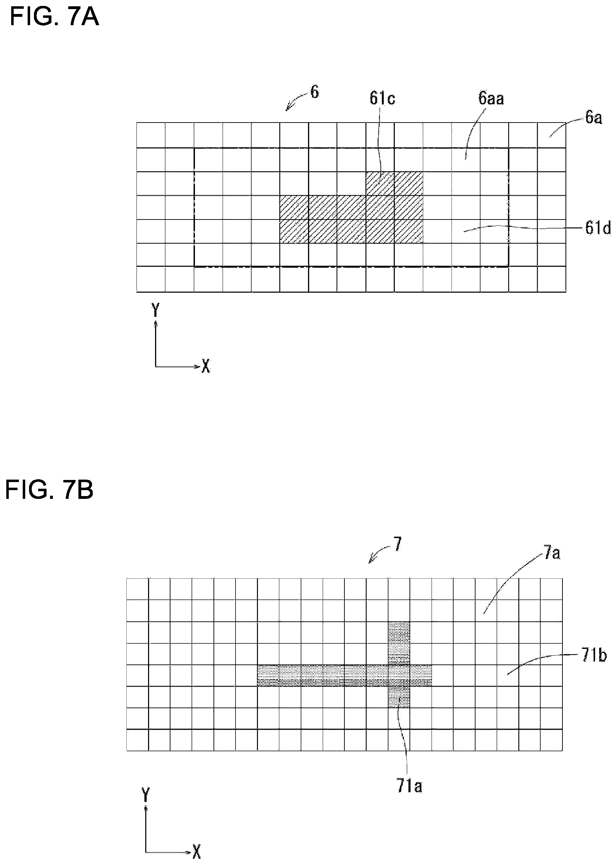

In the virtual image display device 1A according to the present embodiment, the light-emitting surface 6a has substantially the same size as the display surface 7a as illustrated in FIGs. 6, 7A, and 7B. The light-emitting surface 6a may have a size that is the same as or larger than the size of the display surface 7a.

The controller 4 selects an area (also referred to as a light-emitting area) 6aa in the light-emitting surface 6a. The controller 4 selects the light-emitting area 6aa to cause a virtual image 10Q' of the light-emitting area 6aa formed in the field of view of the user 5 to have substantially the same size as the virtual image 20Q of the display surface 7a. The controller 4 selects, from the multiple light emitters 61 in the backlight 6, some light emitters 61c corresponding to the light-emitting area 6aa, and performs the local dimming control to switch the respective selected light emitters 61c between the emissive state and the non-emissive state. The light emitters 61c may be the light emitters 61 included in the light-emitting area 6aa. The controller 4 causes light emitters 61d that do not correspond to the light-emitting area 6aa to be constantly in the non-emissive state independently of the image G displayed on the display surface 7a. The light emitters 61d may be the light emitters 61 not included in the light-emitting area 6aa. The virtual image display device 1A can reduce parallax between the virtual images across the entire virtual image 20Q, and thus allows the user 5 to view the virtual image 20Q with less deteriorated viewability. The light-emitting area 6aa has a size corresponding to the active display area of the display surface 7a. In other words, when the display surface 7a displays images on its four corners, the light-emitting area 6aa allows emission of light toward the images on the four corners.

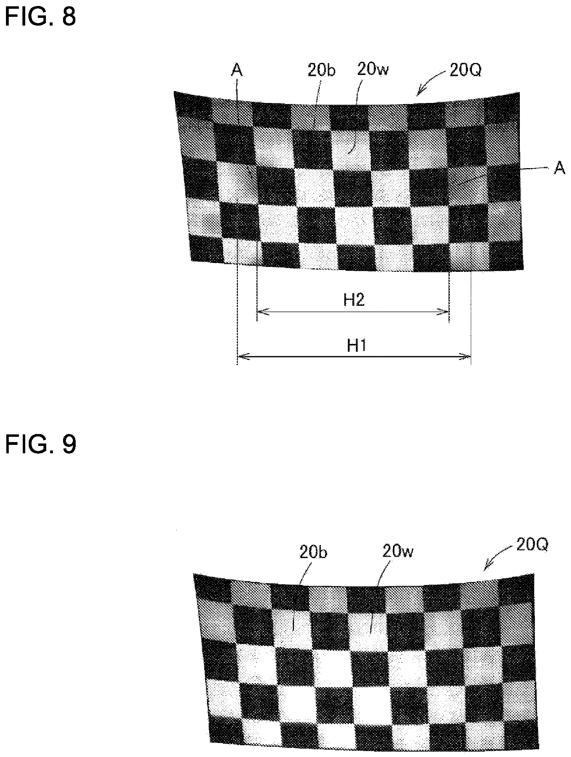

FIG. 8 is a diagram of an example of the virtual image 20Q with deteriorated viewability resulting from parallax between the virtual images. FIG. 8 illustrates the example of the virtual image 20Q viewed by the user 5 when the light emitters 61 overlapping the display pixels 71a as viewed from the front are in the emissive state and the light emitters 61 not overlapping the display pixels 71a as viewed from the front are in the non-emissive state in the backlight 6 and the display panel 7 illustrated in FIGs. 7A and 7B. In FIG. 8, the image G is a black-and-white checkerboard pattern as in FIG. 4. The reference numerals 20w and 20b in FIG. 8 are the same as or similar to the reference numerals 20w and 20b in FIG. 4. FIG.

8 illustrates the virtual image 20Q captured with an imaging device located in an eye box 8. The eye box 8 represents an area defined in a real space in which the eyes of the user 5 are expected to be located. As illustrated in FIG. 8, the virtual image 20Q is less viewable in its peripheral portion (e.g., area A in FIG. 8), with the virtual images of the display pixels 71a overlapping the virtual images of the light emitters 61 in the non-emissive state. FIG. 9 is a diagram of an example of the virtual image 20Q viewed by the user 5 of the virtual image display device 1A. In FIG. 9, the image G is a black-and-white checkerboard pattern as in FIG. 8. The reference numerals 20w and 20b in FIG. 9 are the same as or similar to the reference numerals 20w and 20b in FIG. 4. As illustrated in FIG. 9, the virtual image display device 1A can reduce parallax between the virtual images across the entire virtual image 20Q, and thus allows the user 5 to view the virtual image 20Q with less deteriorated viewability. The distortion in the virtual image 20Q illustrated in FIG. 9 may be reduced by redesigning the optical system 3 or deforming the image G displayed on the display surface 7a.

The light-emitting area 6aa may be selected as described below. When the enlargement factor $\alpha$ for the light-emitting surface 6a is $\alpha1$ in the horizontal direction and $\alpha2$ in the vertical direction and the enlargement factor $\beta$ for the display surface 7a is $\beta1$ in the horizontal direction and $\beta2$ in the vertical direction, an area corresponding to the display surface 7a reduced by $\beta1/\alpha1$ in the horizontal direction and by $\beta2/\alpha2$ in the vertical direction may be selected as the light-emitting area 6aa. The light-emitting area 6aa may be selected to have the center (centroid) substantially aligned with the center of the light-emitting surface 6a as viewed from the front.

The enlargement factors $\alpha1$, $\alpha2$, $\beta1$, and $\beta2$ may be determined, for example, in the manufacture or installation of the virtual image display device 1A by simulation based on, for example, the shapes, the refractivity, and the positional arrangement of the optical members included in the optical system 3. The enlargement factors $\alpha1$, $\alpha2$, $\beta1$, and $\beta2$ may be determined in the manufacture or installation of the virtual image display device 1A based on the virtual image 10Q and the virtual image 20Q captured with the imaging device located in the eye box (an area defined in a real space in which the eyes of the user 5 are expected to be located). Note that the virtual image 10Q is a virtual image formed when the light emitters 61 overlapping the display pixel 71a as viewed from the front are in the emissive state and the light emitters 61 not overlapping the display pixel 71a as viewed from the front are in the non-emissive state in the backlight 6 illustrated in FIG. 7A. As illustrated in, for example, FIG. 8, the ratio of enlargement factors $\beta1/\alpha1$ may be H2/H1 that is the ratio of a horizontal length H2 of a predetermined portion of the virtual image 20Q to a horizontal length H1 of a predetermined portion of the virtual image 10Q. The predetermined portion of the virtual image 10Q and the predetermined portion of the virtual image 20Q may have the same length on the display surface 7a. The enlargement factor $\beta2/\alpha2$ may be determined in the same manner as or in a similar manner to the enlargement factor $\beta1/\alpha1$ based on the captured virtual images 10Q and 20Q.

In the virtual image display device 1A, a change in the specifications (e.g., the enlargement factor $\beta$ for the display surface 7a) of the optical system 3 does not involve redesigning of the backlight 6 to reduce parallax between virtual images. The virtual image display device 1A can allow the user 5 to view the virtual image 20Q with less deteriorated viewability by selecting the light-emitting area 6aa based on, for example, the captured virtual images 10Q and 20Q, selecting the light emitters 61c included in the light-emitting area 6aa, and performing the local dimming control over the respective light emitters 61c. The virtual image display device 1A can also change the size of the virtual image 20Q by simply changing the specifications of the optical system 3. The virtual image display device 1A can thus be used in various movable bodies without redesigning the display 2.

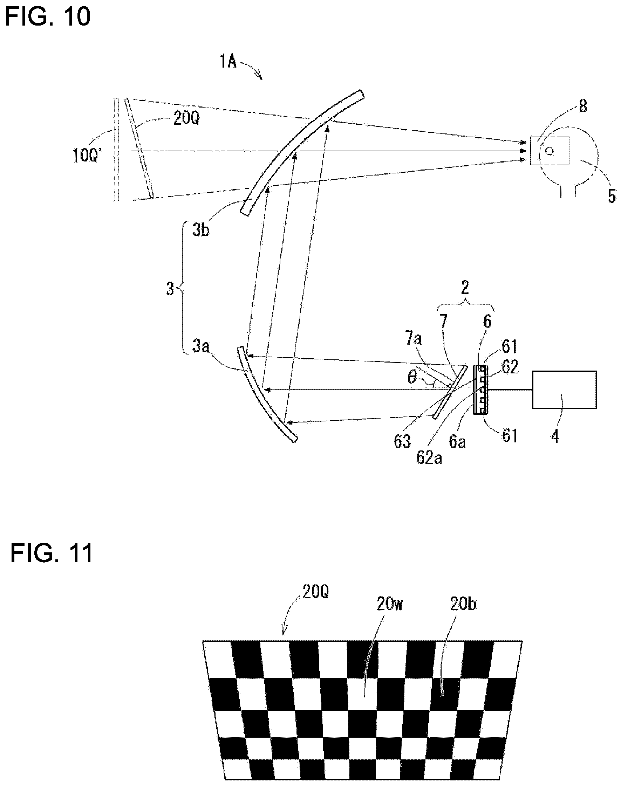

As illustrated in FIG. 10, the virtual image display device 1A may include the display surface 7a oblique to the light-emitting surface 6a. This structure reduces deteriorated viewability while allowing the user 5 to view the virtual image 20Q that provides a sense of depth as illustrated in FIG. 11. In FIG. 11, the image G is a black-and-white checkerboard pattern. The reference numerals 20w and 20b in FIG. 11 are the same as or similar to the reference numerals 20w and 20b in FIG. 4. When the display surface 7a is oblique to the light-emitting surface 6a, the enlargement factor $\beta$ for the display surface 7a may vary in the vertical direction (the up-down direction in FIG. 11). The light-emitting area 6aa may be selected as described below, for example. The enlargement factors $\alpha1$, $\alpha2$, and $\beta2$ as well as the enlargement factor $\beta1$ that varies in the vertical direction are calculated based on the virtual image 10Q of the light-emitting surface 6a and the virtual image 20Q of the display surface 7a captured with the imaging device located in the eye box 8. The calculated enlargement factors $\alpha1$, $\alpha2$, $\beta1$, and $\beta2$ are used to reduce the display surface 7a by $\beta1/\alpha1$ in the horizontal direction and by $\beta2/\alpha2$ in the vertical direction, allowing selection of the light-emitting area 6aa.

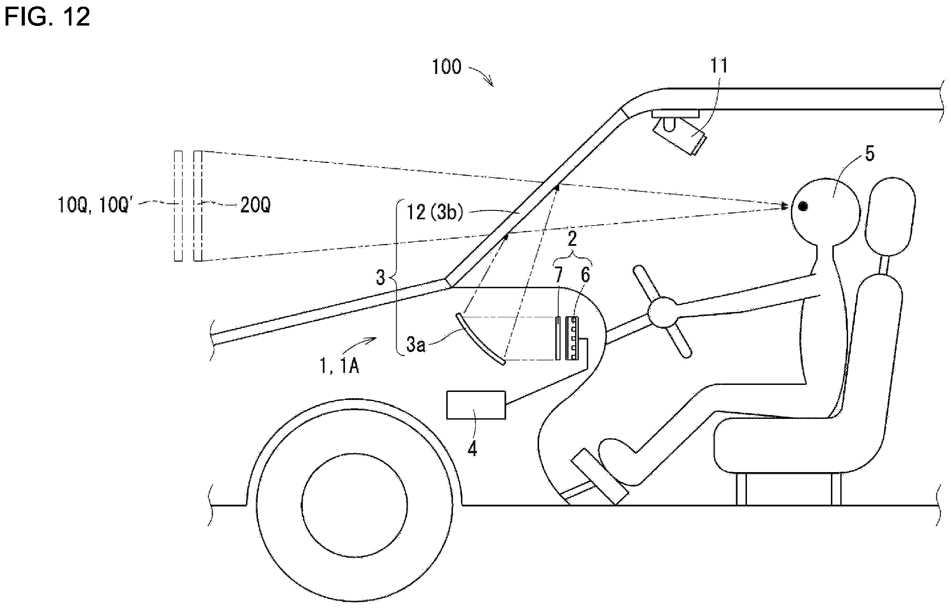

As illustrated in FIG. 12, the virtual image display device 1 or 1A may be mounted on a movable body 100. When the virtual image display device 1 or 1A is mounted on the movable body 100, the virtual image display device 1 or 1A may be partially structured using other devices or components included in the movable body 100. For example, a windshield 12 of the movable body 100 may also be a part of the virtual image display device 1 or 1A. For example, the second reflector 3b illustrated in FIG. 1 may be replaced by the windshield 12 of the movable body 100. The virtual image display device 1 or 1A may be at any position inside or outside the movable body 100. For example, the virtual image display device 1 or 1A may be installed inside a dashboard in the movable body 100.

The virtual image display device 1 or 1A may further include a detector 11 that detects the positions of the eyes of the user 5. The detector 11 is configured to detect the positions of the eyes of the user 5. The detector 11 is configured to output information about the detected positions of the eyes to the controller 4. The information about the detected positions of the eyes is also referred to as eye position information. The controller 4 may be configured to control each of the multiple light emitters 61 to emit or not to emit light based on the positions of the eyes of the user 5 detected by the detector 11. In the virtual image display device 1 or 1A mounted on the movable body 100, the detector 11 may be at any position inside or outside the movable body 100. For example, the detector 11 may be located in the dashboard in the movable body 100. The detector 11 may output information about the positions of the eyes of the user 5 to the controller 4, for example, with wires, wirelessly, or through a controller area network (CAN).

The detector 11 may include an imaging device. The imaging device may include, for example, a charge-coupled device (CCD) image sensor or a complementary metal-oxide-semiconductor (CMOS) image sensor. The imaging device may be configured to capture an image of the face of the user 5. The imaging range of the imaging device includes the eye box. The eye box is an area defined in a real space in which the eyes of the user 5 are expected to be located based on, for example, the body shape, the posture, and changes in the posture of the user 5. The user 5 may include, for example, a driver of the movable body 100. The detector 11 may be configured to detect the positions of the two eyes of the user 5 in a real space based on the captured image generated by the imaging device.

The detector 11 may include, for example, a sensor. The sensor may be, for example, an ultrasonic sensor or an optical sensor. The detector 11 may be configured to detect the position of the head of the user 5 with the sensor and detect the position of the eyes of the user 5 based on the position of the head. The detector 11 may use two or more sensors to detect the positions of the eyes of the user 5 as coordinates in a three-dimensional (3D) space.

The display 2 may include an optical element for allowing the user 5 to view a 3D image. The optical element may be located between the backlight 6 and the display panel 7 along the optical path of image light that reaches the eyes of the user 5. The optical element may be located between the display panel 7 and the optical system 3 along the optical path of image light that reaches the eyes of the user 5. The display panel 7 may be configured to display a left eye image and a right eye image having parallax with respect to the left eye image on the display surface 7a. The optical element may be configured to split image light emitted from the display surface 7a into left-eye image light for the left-eye image and right-eye image light for the right-eye image. The virtual image display device 1 or 1A can thus allow the user 5 to view a 3D image with less deteriorated viewability. The optical element may include a parallax barrier or a lenticular lens. The parallax barrier may include a liquid crystal panel.

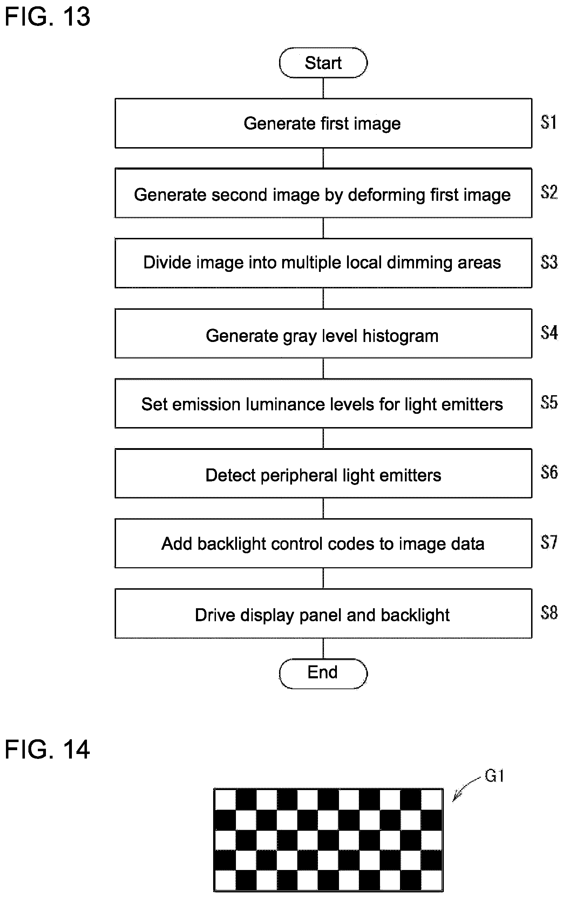

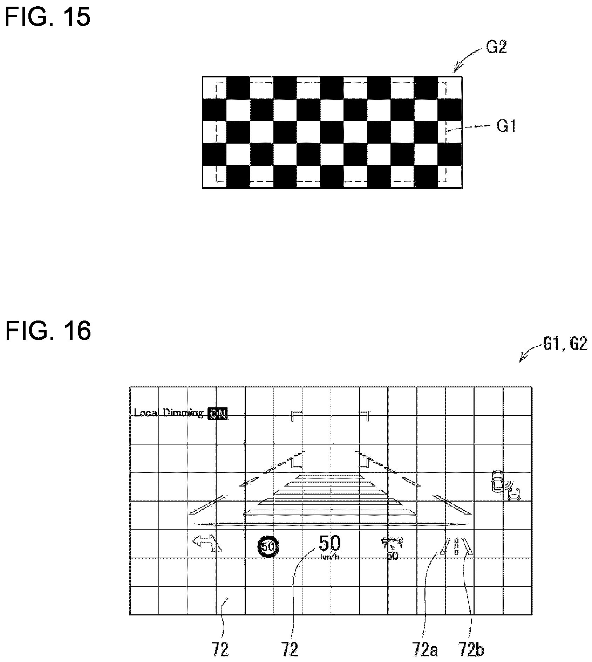

A method for driving a virtual image display device according to one embodiment of the present disclosure will be described below. In the present embodiment, the driving method relates to local dimming control over the backlight 6. FIG. 13 is a flowchart of the method for driving the virtual image display device according to one embodiment of the present disclosure. FIGs. 14 to 28 are diagrams and graphs describing the driving method according to the present embodiment. A method for driving the virtual image display device 1A (refer to FIGs. 6 and 10) will be described below. An image displayed on the display surface 7a is basically a black-and-white checkerboard pattern. However, in FIGs. 16, 20, and 21, an image different from a black-and-white checkerboard pattern is displayed on the display surface 7a for ease of understanding.

First Example

A first example of the driving method according to the present embodiment will be described first. Processing in the flowchart in FIG. 13 is performed by the controller 4. When the processing in the flowchart in FIG. 13 ends, the controller 4 returns to S1 and repeats the processing in S1 to S8.

In S1, the controller 4 may obtain, from an external device, video data of a video to be displayed on the display surface 7a. The video may be, for example, a video of 30 to 120 frames per second (fps). The controller 4 may generate an image (also referred to as a first image G1) for each of the frames as illustrated in FIG. 14 based on the obtained video data.

In S2, the controller 4 generates a second image G2 by deforming the first image G1 based on the enlargement factor for the image of the display surface 7a (also referred to as a first enlargement factor M1) and the enlargement factor for the image of the light-emitting surface 6a (also referred to as a second enlargement factor M2). In this example, the controller 4 enlarges the first image G1 in the horizontal direction (the lateral direction in FIG. 14) and the vertical direction (the up-down direction in FIG. 14) by a predetermined enlargement factor to generate the second image G2 illustrated in FIG. 15. The predetermined enlargement factor is a value obtained by dividing the second enlargement factor M2 by the first enlargement factor M1, and is greater than 1 for the virtual image display device 1A.

In S3, the controller 4 divides the first image G1 into multiple local dimming areas 72 as illustrated in FIG. 16. The number of local dimming areas 72 may be the same as or different from the number of light emitters 61. Each of the multiple local dimming areas 72 may be a rectangular area including a predetermined number of pixels. The multiple local dimming areas 72 are substantially illuminated by the light emitters 61 corresponding to the respective local dimming areas 72. The multiple local dimming areas 72 are substantially illuminated by the light emitters 61 immediately below the respective local dimming areas 72.

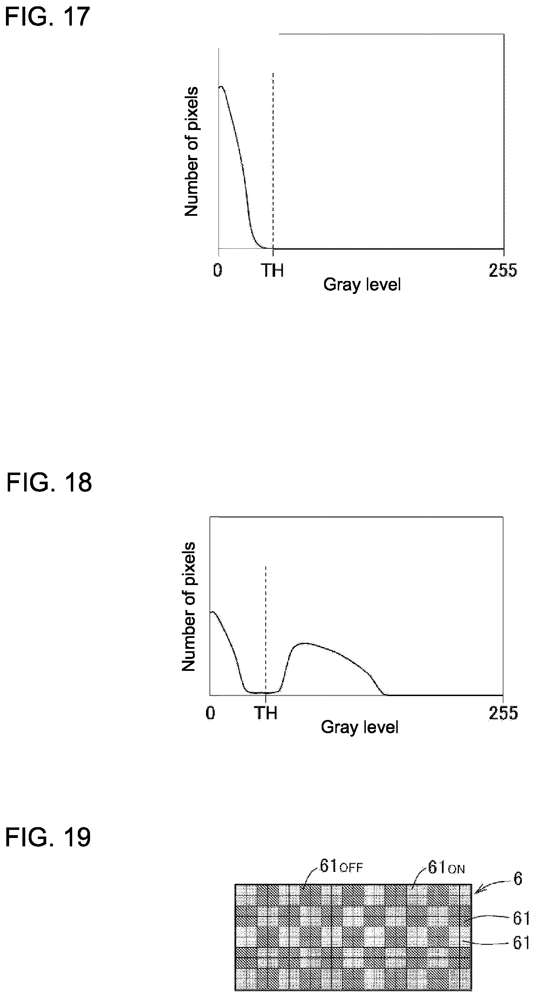

In S4, the controller 4 generates a gray level histogram for each of the local dimming areas 72. As illustrated in FIGs. 17 and 18, the gray level histogram is a histogram with the vertical axis indicating the number of pixels and the horizontal axis indicating the gray level. The gray level is calculated for the multiple pixels in each of the local dimming areas 72 based on the color tone components R, G, and B of the respective pixels. The gray level may be, for example, a value obtained by combining the color tone components R, G, and B of the respective pixels. In other words, the gray level may be expressed as $cr \times R + cg \times G + cb \times B$, where cr, cg, and cb are predetermined coefficients. The coefficients cr, cg, and cb may satisfy $cr + cg + cb = 1$. FIGs. 17 and 18 are the gray level histograms indicating gray levels as integers ranging from 0 to 255.

As illustrated in FIG. 17, the controller 4 determines a local dimming area 72 in which at least N% of the total pixels (all the pixels in the local dimming area) have gray levels lower than or equal to a threshold TH as a background area 72a. As illustrated in FIG. 18, the controller 4 also determines a local dimming area in which fewer than N% of the total pixels have gray levels lower than or equal to the threshold TH as a display area 72b. When the gray levels are indicated with integers ranging from 0 to 255, the threshold TH may be, for example, an integer in a range of 0 to 68. For example, N may be a number in a range of 50 to 90.

The threshold TH may be determined based on the background luminance level in the field of view of the user 5 (in other words, the luminance level of the forward view of the movable body 100). In other words, the threshold TH may be determined based on the ambient environment of the movable body 100. The ambient environment may include, for example, time and the weather and road conditions around the movable body 100. For example, in a nighttime ambient environment with the background luminance level for the user 5 being 5 cd/m$^2$, the image (white image) displayed on the display surface 7a is to have a display luminance level of 350 cd/m$^2$ to allow the user 5 to view a clear virtual image (white virtual image). In this case, the background contrast is 71. The background contrast is $(a + b)/a$, where a (cd/m$^2$) is the background luminance level and b (cd/m$^2$) is the display luminance level. When the background contrast is 1.0, a virtual image (white color) is less viewable to the user 5. Thus, when the display luminance level b that provides a background contrast of 1.0 is converted to a gray level value as a gray level $TH_{MAX}$ using $\gamma$ correction ($\gamma = 2.2$), the background area 72a can be appropriately determined based on the threshold TH that is set to a value in a range of 0 to $TH_{MAX}$. As shown in Table 1, in a nighttime ambient environment with the background luminance level for the user 5 being 5 cd/m$^2$, the threshold TH may be set to a value in a range of 0 to 9. In a twilight ambient environment with the background luminance level for the user 5 being 50 cd/m$^2$, the threshold TH may be set to a value in a range of 0 to 17. In a snow wall or frontal lighting ambient environment with the background luminance level for the user 5 being 11000 cd/m$^2$, the threshold TH may be set to a value in a range of 0 to 68.

Table 1

| Ambient environment | Nighttime | Twilight | Snow wall or frontal lighting |
|---|---|---|---|
| Background luminance level (cd/m$^2$) | 5 | 50 | 11,000 |
| HUD display color | White | White | White |
| HUD display luminance level (cd/m$^2$) | 350 | 900 | 10,000 |
| Background contrast | 71 | 19 | 1.9 |
| Gray level TH$_{MAX}$ | 9 | 17 | 68 |
| Threshold TH | 0-9 | 0-17 | 0-68 |

As illustrated in FIG. 19, the controller 4 identifies the light emitters 61 at least partially included in the display area as viewed from the front (or in other words, when the first image G1 and the light-emitting surface 6a are viewed in a overlapping manner in a direction of light emission from the backlight 6), as light emitters 61$_{ON}$ to be in the emissive state, and identifies the light emitters 61 fully included in the background area as light emitters 61$_{OFF}$ to be in the non-emissive state.

In S5, the controller 4 obtains the background luminance level in the field of view of the user 5, and sets the emission luminance levels for the light emitters 61$_{ON}$ based on the obtained background luminance level. The controller 4 sets higher emission luminance levels of the light emitters 61$_{ON}$ (or in other words, sets higher values of drive currents supplied to the light emitters 61$_{ON}$) for higher background luminance levels. This allows the user 5 to view a clear virtual image 20Q.

The virtual image display device 1A may include a luminometer that measures the background luminance level in the field of view of the user 5 and outputs the background luminance level to the controller 4. When the movable body 100 includes a luminometer that measures the luminance level of the forward view of the movable body 100, the controller 4 may obtain the luminance level of the forward view from the luminometer in the movable body 100 and use the obtained luminance level of the forward view as the background luminance level in the field of view of the user 5.

The controller 4 may set, in addition to the background luminance level, the emission luminance levels of the light emitters 61$_{ON}$ based further on the ambient environment of the movable body 100. For example, as shown in Table 2, in a nighttime for asphalt road ambient environment with the background luminance level being 5 $cd/m^2$, the controller 4 may set the emission luminance level of the backlight 6 to 54000 $cd/m^2$ to cause the display surface 7a to display an image (white image) having a luminance level of 350 $cd/m^2$ to allow the user to view a clear virtual image (white virtual image). The controller 4 may thus set the emission luminance levels of the light emitters $61_{ON}$ to cause the emission luminance level of the backlight 6 to be 54000 $cd/m^2$. As shown in Table 2, in a nighttime for snow road ambient environment with the background luminance level for the user 5 being 50 $cd/m^2$, the emission luminance levels of the light emitters $61_{ON}$ may be set to cause the emission luminance level of the backlight 6 to be 140000 $cd/m^2$ to cause the display surface 7a to display an image (white image) having a luminance level of 900 $cd/m^2$. Other background luminance levels and ambient environments are also shown in Table 2. The controller 4 may include a database storing emission luminance levels to be set in the backlight 6 based on background luminance levels and ambient environments. The controller 4 may read an emission luminance level to be set in the backlight 6 from the database based on the background luminance level and the ambient environment, and may set the emission luminance levels of the light emitters $61_{ON}$ based on the read emission luminance level.

Table 2

| Ambient environment | Nighttime | | Daytime | | |
|---|---|---|---|---|---|
| | Asphalt road | Snow road | Asphalt road (Cloudy) | Asphalt road (Sunny) | Snow road (Sunny) |
| Background luminance level ($cd/m^2$) | 5 | 50 | 100 | 2,000 | 10,000 |
| HUD display color | White | White | White | White | White |
| HUD display luminance level ($cd/m^2$) | 350 | 900 | 1,200 | 4,000 | 13,000 |
| Backlight luminance level ($cd/m^2$) | 54,000 | 140,000 | 190,000 | 620,000 | 2,150,000 |

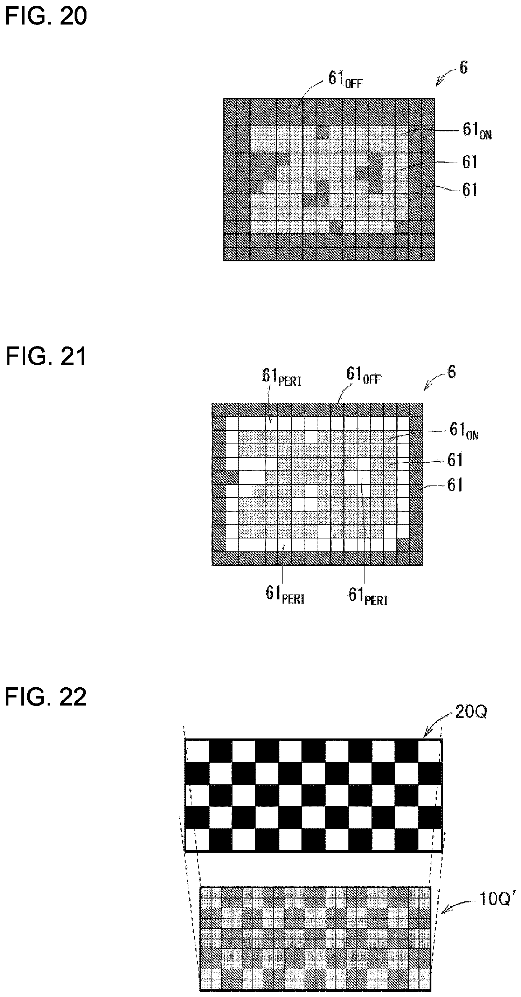

In S6, the controller 4 determines whether the respective light emitters $61_{OFF}$ (refer to FIG. 20) are adjacent to the light emitters $61_{ON}$. As illustrated in FIG. 21, the controller 4 may retain, as the light emitters $61_{OFF}$ to be in the non-emissive state, the light emitters $61_{OFF}$ determined as not being adjacent to the light emitters $61_{ON}$, and may identify, as the light emitters $61_{OFF}$ to be in the emissive state (peripheral light emitters $61_{PERI}$), the light emitters $61_{OFF}$ determined as being adjacent to the light emitters $61_{ON}$. The controller 4 causes the peripheral light emitters $61_{PERI}$ to emit light at predetermined luminance levels in S8 (described later). Detecting the peripheral light emitters $61_{PERI}$ and causing the peripheral light emitters $61_{PERI}$ to emit light can reduce the likelihood of blurred (unclear) edges of, for example, a letter or a figure displayed on the display area 72b. Additionally, when the eyes of the user 5 move to different positions within the eye box 8, the virtual image 20Q viewed by the user 5 is less likely to have a lower luminance level. This allows the user 5 to view a clear virtual image 20Q. The peripheral light emitters $61_{PERI}$ may have the same emission luminance levels as the light emitters $61_{ON}$, or may have emission luminance levels of about 20 to 80%, about 30 to 70%, or about 40 to 60% of the emission luminance levels of the light emitters $61_{ON}$.

In S7, the controller 4 generates image data of the second image G2 with backlight control codes representing the details of control over the respective light emitters 61.

In S8, the controller 4 controls the display panel 7 to display the second image G2 on the display surface 7a based on the image data with the backlight control codes, and controls the backlight 6 to emit light from the light emitters $61_{ON}$ and the peripheral light emitters $61_{PERI}$ based on the image data with the backlight control codes. In this manner, the user 5 can view the virtual image 20Q with higher contrast as illustrated in FIG. 22.

In the example described above, the processing in S3 to S6 is performed based on the first image G1 and the arrangement of the light emitters 61 on the light-emitting surface 6a. However, the processing in S3 to S6 may be performed based on the second image G2 and the arrangement of the light emitters 61 on the light-emitting surface 6a enlarged by the second enlargement factor M2.

Second Example

A second example of the driving method according to the present embodiment will now be described. The same processing as or similar processing to the processing in the first example will not be described in detail below.

In S1, the controller 4 may obtain, from an external device, video data of a video to be displayed on the display surface 7a. The controller 4 may generate a first image G1 for each frame as illustrated in FIG. 14 based on the obtained video data.

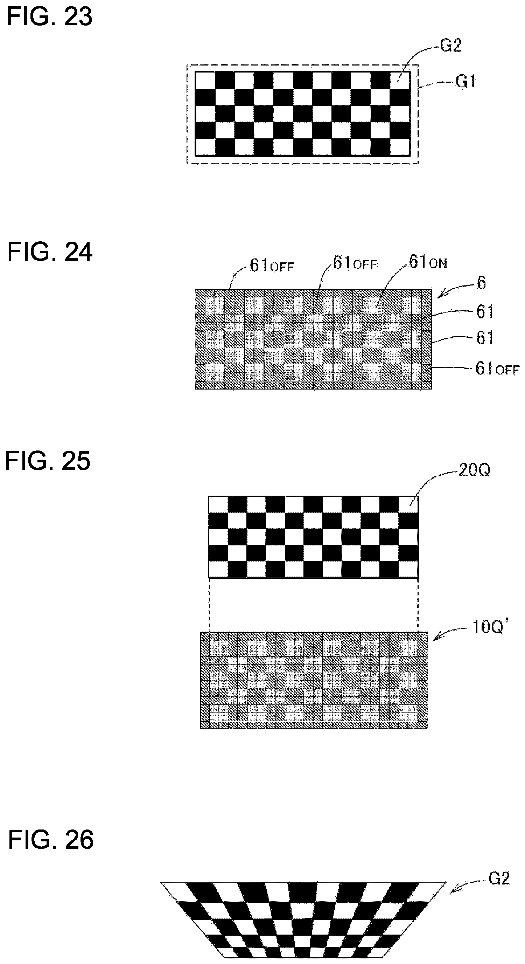

In S2, the controller 4 generates a second image G2 by deforming the first image G1 based on the first enlargement factor M1 and the second enlargement factor M2. In this example, the controller 4 reduces the first image G1 in the horizontal direction and in the vertical direction by a predetermined reduction factor to generate the second image G2 as illustrated in FIG. 23. The predetermined reduction factor is a value obtained by dividing the first enlargement factor M1 by the second enlargement factor M2, and is less than 1 for the virtual image display device 1A.

In S3, the controller 4 divides the second image G2 into multiple local dimming areas 72 as illustrated in FIG. 16.

In S4, the controller 4 generates a gray level histogram for each of the local dimming areas 72, determines a local dimming area 72 in which at least N% of the total pixels have gray levels less than or equal to the threshold TH as the background area 72a, and determines a local dimming area 72 in which fewer than N% of the total pixels have gray levels lower than or equal to the threshold TH as the display area 72b.

As illustrated in FIG. 24, the controller 4 determines the light emitters 61 at least partially included in the display area 72b as viewed from the front as the light emitters $61_{ON}$ to be in the emissive state and determines the light emitters 61 fully included in the background area as the light emitters $61_{OFF}$ to be in the non-emissive state.

In S5, the controller 4 obtains the background luminance level in the field of view of the user 5 and sets the emission luminance levels of the light emitters $61_{ON}$ based on the obtained background luminance level.

In S6, the controller 4 determines whether the respective light emitters $61_{OFF}$ are adjacent to the light emitters $61_{ON}$. The controller 4 may retain, as the light emitters $61_{OFF}$ to be in the non-emissive state, the light emitters $61_{OFF}$ determined as not being adjacent to the light emitters $61_{ON}$, and may identify, as the peripheral light emitters $61_{PERI}$, the light emitters $61_{OFF}$ determined as being adjacent to the light emitters $61_{ON}$.

In S7, the controller 4 generates image data of the first image G1 with backlight control codes representing the details of control over the respective light emitters 61.

In S8, the controller 4 controls the display panel 7 to display the first image G1 on the display surface 7a based on the image data with the backlight control codes, and controls the backlight 6 to emit light from the light emitters $61_{ON}$ and the peripheral light emitters $61_{PERI}$ based on the image data with the backlight control codes. In this manner, the user 5 can view the virtual image 20Q with higher contrast as illustrated in FIG. 25.

Third Example

A third example of the driving method according to the present embodiment will now be described. The same processing as or similar processing to the processing in the first example and the second example will not be described in detail below. When the display surface 7a is oblique to the light-emitting surface 6a (refer to FIG. 10), the driving method in this example allows the user 5 to view the virtual image 20Q with higher contrast and a sense of depth. In the virtual image display device 1A, the angle of inclination of the display surface 7a with respect to the light-emitting surface 6a may be, for example, 10 to 45°. The inclination angle θ is an angle formed by a normal to the display surface 7a and a normal to the light-emitting surface 6a.

In S1, the controller 4 may obtain, from an external device, video data of a video to be displayed on the display surface 7a. The controller 4 may generate a first image G1 for each frame as illustrated in FIG. 14 based on the obtained video data.

In S2, the controller 4 generates a second image G2 (refer to FIG. 26) by deforming the first image G1 based on the first enlargement factor M1 and the second enlargement factor M2. In this example, the controller 4 reduces the first image G1 in the vertical direction based on the first enlargement factor M1 and the second enlargement factor M2. The controller 4 may reduce the first image G by cosθ in the vertical direction based on the inclination angle θ of the display surface 7a with respect to the light-emitting surface 6a. The controller 4 further deforms the first image G1 by a predetermined ratio in the horizontal direction based on the first enlargement factor M1 and the second enlargement factor M2. The predetermined ratio may vary in the vertical direction of the first image G1. For the first image G1 imaginarily divided into multiple areas g1, g2, and g3 displaced in the vertical direction from one another, the predetermined ratio is a value obtained by, for each of the areas g1, g2, and g3, dividing the enlargement factor for the display surface 7a in the horizontal direction by the enlargement factor for the light-emitting surface 6a in the horizontal direction. Note that the number of multiple areas g1, g2, and g3 (the number of divisions in the first image G1) may be any number, and may be, for example, the same as the number of pixel rows in the first image G1.

In S3, the controller 4 divides the second image G2 into multiple local dimming areas 72 as illustrated in FIG. 16.

In S4, the controller 4 generates a gray level histogram for each of the local dimming areas 72, determines a local dimming area 72 in which at least N% of the total pixels have gray levels less than or equal to the threshold TH as the background area 72a, and determines a local dimming area 72 in which fewer than N% of the total pixels have gray levels lower than or equal to the threshold TH as the display area 72b.

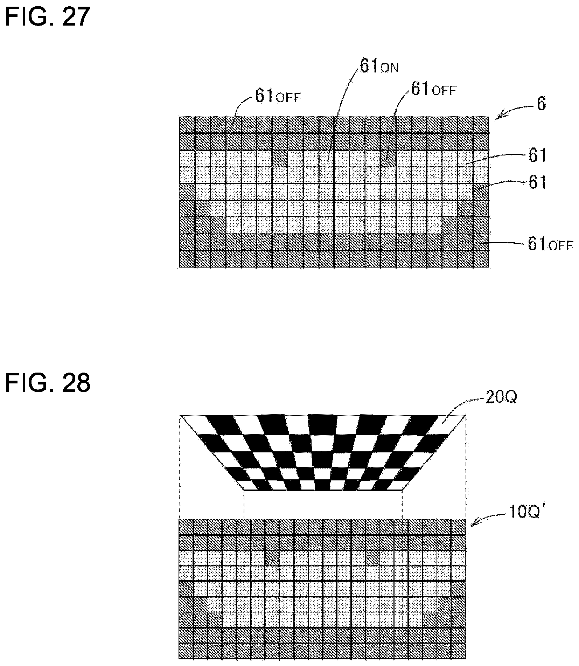

As illustrated in FIG. 27, the controller 4 identifies the light emitters 61 at least partially included in the display area 72b as viewed from the front as the light emitters $61_{ON}$ to be in the emissive state, and identifies the light emitters 61 fully included in the background area 72a as the light emitters $61_{OFF}$ to be in the non-emissive state.

In S5, the controller 4 obtains the background luminance level in the field of view of the user 5 and sets the emission luminance levels of the light emitters $61_{ON}$ based on the obtained background luminance level.

In S6, the controller 4 determines whether the respective light emitters $61_{OFF}$ are adjacent to the light emitters $61_{ON}$. The controller 4 may retain, as the light emitters $61_{OFF}$ to be in the non-emissive state, the light emitters $61_{OFF}$ determined as not being adjacent to the light emitters $61_{ON}$, and may identify, as the peripheral light emitters $61_{PERI}$, the light emitters $61_{OFF}$ determined as being adjacent to the light emitters $61_{ON}$.

In S7, the controller 4 generates image data of the first image G1 with backlight control codes representing the details of control over the respective light emitters 61.

In S8, the controller 4 controls the display panel 7 to display the first image G1 on the display surface 7a based on the image data with the backlight control codes, and controls the backlight 6 to emit light from the light emitters $61_{ON}$ and the peripheral light emitters $61_{PERI}$ based on the image data with the backlight control codes. In this manner, the user 5 can view the virtual image 20Q with higher contrast and a sense of depth as illustrated in FIG. 28.

The controller 4 in the virtual image display device 1A may be configured to perform the processes included in the method for driving the virtual image display device according to one or more embodiments of the present disclosure. A program for causing a computer to perform the processes included in the method for driving the virtual image display device according to one or more embodiments of the present disclosure may also be provided. The program may be stored in a non-transitory computer-readable medium. Examples of the computer-readable medium include a magnetic storage medium, an optical storage medium, a magneto-optical storage medium, and a semiconductor storage medium.

In one or more embodiments of the present disclosure, the movable body includes a vehicle, a vessel, and an aircraft. In one or more embodiments of the present disclosure, the vehicle includes, but is not limited to, an automobile or an industrial vehicle, and may also include a railroad vehicle, a community vehicle, or a fixed-wing aircraft that travels on a runway. The automobile includes, but is not limited to, a passenger vehicle, a truck, a bus, a motorcycle, and a trolley bus, and may also include another vehicle that travels on a road. The industrial vehicle includes an industrial vehicle for agriculture and an industrial vehicle for construction. The industrial vehicle includes, but is not limited to, a forklift and a golf cart. The industrial vehicle for agriculture includes, but is not limited to, a tractor, a cultivator, a transplanter, a binder, a combine, and a lawn mower. The industrial vehicle for construction includes, but is not limited to, a bulldozer, a scraper, a power shovel, a crane vehicle, a dump truck, and a road roller. The vehicle includes a human-powered vehicle. Note that the classification of the vehicle is not limited to the above. For example, the automobile may include an industrial vehicle traveling on a road, and one type of vehicle may fall within multiple classes. In one or more embodiments of the present disclosure, the vessel includes a jet ski, a boat, and a tanker. In one or more embodiments of the present disclosure, the aircraft includes a fixed-wing aircraft and a rotary-wing aircraft.

One or more embodiments of the present disclosure can reduce parallax between the display virtual image and the light source virtual image across the entire display virtual image, and can reduce deteriorated viewability of the display virtual image.

The structure according to one or more embodiments of the present disclosure is not limited to the structure described in the embodiments above, and may be varied or altered variously. For example, the functions of the components are reconfigurable unless any contradiction arises. Multiple components may be combined into a single unit, or a single component may be divided into separate units.

In one or more embodiments of the present disclosure, first, second, and others are identifiers for distinguishing the components. The identifiers of the components distinguished with first, second, and others in one or more embodiments of the present disclosure are interchangeable. For example, the first reflector is interchangeable with the second reflector. The identifiers are to be interchanged together. The components for which the identifiers are interchanged are also to be distinguished from one another. The identifiers may be eliminated. The components without such identifiers can be distinguished with reference numerals. The identifiers such as first, second, and others in one or more embodiments of the present disclosure alone should not be used to determine the order of the components or to determine the existence of smaller number identifiers.

In one or more embodiments of the present disclosure, the X-axis, the Y-axis, and the Z-axis are used for ease of explanation and may be interchangeable with one another. The orthogonal coordinate system including the X-axis, the Y-axis, and the Z-axis is used to describe the structures according to one or more embodiments of the present disclosure. The positional relationship between the components in one or more embodiments of the present disclosure is not limited to being orthogonal.

The virtual image display device, the movable body, the method for driving the virtual image display device, and the program according to one or more embodiments of the present disclosure may have aspects (1) to (19) described below.

(1) A virtual image display device, comprising:

a backlight including a plurality of light emitters and a light-emitting surface configured to emit light from the plurality of light emitters;
a display panel including a display surface configured to display an image with light emitted from the light-emitting surface;

an optical system configured to enlarge an image of the display surface and an image of the light-emitting surface by different enlargement factors to form a virtual image in a field of view of a user; and

a backlight controller configured to perform local dimming control by switching each of the plurality of light emitters between an emissive state and a non-emissive state based on the image displayed on the display panel, wherein the light-emitting surface is smaller than the display surface.

(2) A virtual image display device, comprising:

a backlight including a plurality of light emitters and a light-emitting surface configured to emit light from the plurality of light emitters;

a display panel including a display surface configured to display an image with light emitted from the light-emitting surface;

an optical system configured to enlarge an image of the display surface and an image of the light-emitting surface by different enlargement factors to form a virtual image in a field of view of a user; and

a backlight controller configured to select, in the light-emitting surface, an area to be formed as a virtual image having a same size as the image of the display surface in the field of view of the user, the backlight controller being configured to perform local dimming control by switching a light emitter corresponding to the selected area among the plurality of light emitters between an emissive state and a non-emissive state based on the image displayed on the display surface area.

(3) The virtual image display device according to aspect (1) or aspect (2), wherein

the optical system includes a plurality of reflectors,

a first reflector of the plurality of reflectors reflects the image of the display surface and the image of the light-emitting surface toward a second reflector of the plurality of reflectors, and

the second reflector reflects the image of the display surface and the image of the light-emitting surface toward the field of view of the user.

(4) The virtual image display device according to any one of aspects (1) to (3), wherein the display surface is oblique to the light-emitting surface.

(5) A movable body, comprising:

the virtual image display device according to aspect (3); and

a windshield configured to reflect the image light reflected by the first reflector toward an eye of the user.

(6) A virtual image display device, comprising:

a backlight including a plurality of light emitters and a light-emitting surface configured to emit light from the plurality of light emitters;

a display panel including a display surface configured to display an image with light emitted from the light-emitting surface;

an optical system configured to enlarge an image of the display surface and an image of the light-emitting surface by different enlargement factors to form a virtual image in a field of view of a user; and

a backlight controller configured to generate a second image by deforming a first image to be displayed on the display panel based on the enlargement factors by which the optical system enlarges the image of the display surface and the image of the light-emitting surface and perform local dimming control by switching each of the plurality of light emitters between an emissive state and a non-emissive state based on the second image.

(7) A virtual image display device, comprising:

a backlight including a plurality of light emitters and a light-emitting surface configured to emit light from the plurality of light emitters;

a display panel including a display surface configured to display an image with light emitted from the light-emitting surface;

an optical system configured to enlarge an image of the display surface and an image of the light-emitting surface by different enlargement factors to form a virtual image in a field of view of a user; and

a backlight controller configured to generate a second image to be displayed on the display panel by deforming a first image based on the enlargement factors by which the optical system enlarges the image of the display surface and the image of the light-emitting surface and perform local dimming control by switching each of the plurality of light emitters between an emissive state and a non-emissive state based on the first image.

(8) A method for driving a virtual image display device, the virtual image display device including a backlight including a plurality of light emitters and a light-emitting surface configured to emit light from the plurality of light emitters, a display panel including a display surface configured to display an image with light emitted from the light-emitting surface, and an optical system configured to enlarge an image of the display surface and an image of the light-emitting surface by different enlargement factors to form a virtual image in a field of view of a user, the method comprising:

generating a second image by deforming a first image to be displayed on the display panel based on the enlargement factors by which the optical system enlarges the image of the display surface and the image of the light-emitting surface; and
performing local dimming control by switching each of the plurality of light emitters between an emissive state and a non-emissive state based on the second image.

(9) The method according to aspect (8), wherein
the performing local dimming control includes

dividing the second image into a plurality of local dimming areas and generating a gray level histogram for each of the plurality of local dimming areas, and
setting each of the plurality of light emitters to the emissive state or the non-emissive state based on the gray level histogram.

(10) A method for driving a virtual image display device, the virtual image display device including a backlight including a plurality of light emitters and a light-emitting surface configured to emit light from the plurality of light emitters, a display panel including a display surface configured to display an image with light emitted from the light-emitting surface, and an optical system configured to enlarge an image of the display surface and an image of the light-emitting surface by different enlargement factors to form a virtual image in a field of view of a user, the method comprising:

generating a second image to be displayed on the display panel by deforming a first image based on the enlargement factors by which the optical system enlarges the image of the display surface and the image of the light-emitting surface; and
performing local dimming control by switching each of the plurality of light emitters between an emissive state and a non-emissive state based on the first image.

(11) The method according to aspect (10), wherein
the performing local dimming control includes

dividing the first image into a plurality of local dimming areas and generating a gray level histogram for each of the plurality of local dimming areas, and
setting each of the plurality of light emitters to the emissive state or the non-emissive state based on the gray level histogram.

(12) The method according to any one of aspects (8) to (11), wherein
the performing local dimming control includes setting an emission luminance level of a light emitter among the plurality of light emitters set to the emissive state based on a background luminance level in the field of view of the user.
(13) The method according to any one of aspects (8) to (12), wherein
the performing local dimming control includes switching a light emitter among the plurality of light emitters set to the non-emissive state and adjacent to a light emitter set to the emissive state to the emissive state.
(14) A program executable by a virtual image display device including a backlight including a plurality of light emitters and a light-emitting surface configured to emit light from the plurality of light emitters, a display panel including a display surface configured to display an image with light emitted from the light-emitting surface, and an optical system configured to enlarge an image of the display surface and an image of the light-emitting surface by different enlargement factors to form a virtual image in a field of view of a user, the program causing the virtual image display device to perform operations comprising:

generating a second image by deforming a first image to be displayed on the display panel based on the enlargement factors by which the optical system enlarges the image of the display surface and the image of the light-emitting surface; and
performing local dimming control by switching each of the plurality of light emitters between an emissive state and a non-emissive state based on the second image.

(15) The program according to aspect (14), wherein
the performing local dimming control includes

dividing the second image into a plurality of local dimming areas and generating a gray level histogram for each of the plurality of local dimming areas, and
setting each of the plurality of light emitters to the emissive state or the non-emissive state based on the gray level histogram.

(16) A program executable by a virtual image display device including a backlight including a plurality of light emitters and a light-emitting surface configured to emit light from the plurality of light emitters, a display panel including a display surface configured to display an image with light emitted from the light-emitting surface, and an optical system configured to enlarge an image of the display surface and an image of the light-emitting surface by different enlargement factors to form a virtual image in a field of view of a user, the program causing the virtual image display device to perform operations comprising:

generating a second image to be displayed on the display panel by deforming a first image based on the enlargement factors by which the optical system enlarges the image of the display surface and the image of the light-emitting surface; and
performing local dimming control by switching each of the plurality of light emitters between an emissive state and a non-emissive state based on the first image.

(17) The program according to aspect (16), wherein
the performing local dimming control includes

dividing the first image into a plurality of local dimming areas and generating a gray level histogram for each of the plurality of local dimming areas, and
setting each of the plurality of light emitters to the emissive state or the non-emissive state based on the gray level histogram.

(18) The program according to any one of aspects (14) to (17), wherein
the performing local dimming control includes setting an emission luminance level of a light emitter among the plurality of light emitters set to the emissive state based on a background luminance level in the field of view of the user.
(19) The program according to any one of aspects (14) to (18), wherein
the performing local dimming control includes switching a light emitter among the plurality of light emitters set to the non-emissive state and adjacent to a light emitter set to the emissive state to the emissive state.

REFERENCE SIGNS

1, 1A virtual image display device
2 display
3 optical system
3a first optical member (first reflector)
3b second optical member (second reflector)
4 backlight controller (controller)
5 user
6 backlight
6a light-emitting surface
6aa area (light-emitting area)
61, 61a, 61b, 61c, 61d, $61_{ON}$, $61_{OFF}$, $61_{PERI}$ light emitter
62 base
62a main surface

63 diffuser plate
7 display panel
7a display surface
71 pixel
71a pixel (display pixel)
71b pixel (non-display pixel)
72 local dimming area
72a background area
72b display area
8 eye box
10Q, 10Q', 20Q virtual image
10g gray portion
10w white portion
20b black portion
20w white portion
11 detector
12 windshield
100 movable body

**Claims**

1. A virtual image display device, comprising:

   a backlight including a plurality of light emitters and a light-emitting surface configured to emit light from the plurality of light emitters;
   a display panel including a display surface configured to display an image with light emitted from the light-emitting surface;
   an optical system configured to enlarge an image of the display surface and an image of the light-emitting surface by different enlargement factors to form a virtual image in a field of view of a user; and
   a backlight controller configured to perform local dimming control by switching each of the plurality of light emitters between an emissive state and a non-emissive state based on the image displayed on the display panel,
   wherein the light-emitting surface is smaller than the display surface.

2. A virtual image display device, comprising:

   a backlight including a plurality of light emitters and a light-emitting surface configured to emit light from the plurality of light emitters;
   a display panel including a display surface configured to display an image with light emitted from the light-emitting surface;
   an optical system configured to enlarge an image of the display surface and an image of the light-emitting surface by different enlargement factors to form a virtual image in a field of view of a user; and
   a backlight controller configured to select, in the light-emitting surface, an area to be formed as a virtual image having a same size as the image of the display surface in the field of view of the user, the backlight controller being configured to perform local dimming control by switching a light emitter corresponding to the selected area among the plurality of light emitters between an emissive state and a non-emissive state based on the image displayed on the display surface area.

3. The virtual image display device according to claim 1 or claim 2, wherein

   the optical system includes a plurality of reflectors,
   a first reflector of the plurality of reflectors reflects the image of the display surface and the image of the light-emitting surface toward a second reflector of the plurality of reflectors, and
   the second reflector reflects the image of the display surface and the image of the light-emitting surface toward the field of view of the user.

4. The virtual image display device according to claim 2 or claim 3, wherein
   the display surface is oblique to the light-emitting surface.

5. A movable body, comprising:

the virtual image display device according to claim 3; and
a windshield configured to reflect the image light reflected by the first reflector toward an eye of the user.

6. A virtual image display device, comprising:

a backlight including a plurality of light emitters and a light-emitting surface configured to emit light from the plurality of light emitters;
a display panel including a display surface configured to display an image with light emitted from the light-emitting surface;
an optical system configured to enlarge an image of the display surface and an image of the light-emitting surface by different enlargement factors to form a virtual image in a field of view of a user; and
a backlight controller configured to generate a second image by deforming a first image to be displayed on the display panel based on the enlargement factors by which the optical system enlarges the image of the display surface and the image of the light-emitting surface and perform local dimming control by switching each of the plurality of light emitters between an emissive state and a non-emissive state based on the second image.

7. A virtual image display device, comprising:

a backlight including a plurality of light emitters and a light-emitting surface configured to emit light from the plurality of light emitters;
a display panel including a display surface configured to display an image with light emitted from the light-emitting surface;
an optical system configured to enlarge an image of the display surface and an image of the light-emitting surface by different enlargement factors to form a virtual image in a field of view of a user; and
a backlight controller configured to generate a second image to be displayed on the display panel by deforming a first image based on the enlargement factors by which the optical system enlarges the image of the display surface and the image of the light-emitting surface and perform local dimming control by switching each of the plurality of light emitters between an emissive state and a non-emissive state based on the first image.

8. A method for driving a virtual image display device, the virtual image display device including a backlight including a plurality of light emitters and a light-emitting surface configured to emit light from the plurality of light emitters, a display panel including a display surface configured to display an image with light emitted from the light-emitting surface, and an optical system configured to enlarge an image of the display surface and an image of the light-emitting surface by different enlargement factors to form a virtual image in a field of view of a user, the method comprising:

generating a second image by deforming a first image to be displayed on the display panel based on the enlargement factors by which the optical system enlarges the image of the display surface and the image of the light-emitting surface; and
performing local dimming control by switching each of the plurality of light emitters between an emissive state and a non-emissive state based on the second image.

9. The method according to claim 8, wherein
the performing local dimming control includes

dividing the second image into a plurality of local dimming areas and generating a gray level histogram for each of the plurality of local dimming areas, and
setting each of the plurality of light emitters to the emissive state or the non-emissive state based on the gray level histogram.

10. A method for driving a virtual image display device, the virtual image display device including a backlight including a plurality of light emitters and a light-emitting surface configured to emit light from the plurality of light emitters, a display panel including a display surface configured to display an image with light emitted from the light-emitting surface, and an optical system configured to enlarge an image of the display surface and an image of the light-emitting surface by different enlargement factors to form a virtual image in a field of view of a user, the method comprising:

generating a second image to be displayed on the display panel by deforming a first image based on the enlargement factors by which the optical system enlarges the image of the display surface and the image of the light-emitting surface; and

performing local dimming control by switching each of the plurality of light emitters between an emissive state and a non-emissive state based on the first image.

**11.** The method according to claim 10, wherein
the performing local dimming control includes

dividing the first image into a plurality of local dimming areas and generating a gray level histogram for each of the plurality of local dimming areas, and
setting each of the plurality of light emitters to the emissive state or the non-emissive state based on the gray level histogram.

**12.** The method according to any one of claims 8 to 11, wherein
the performing local dimming control includes setting an emission luminance level of a light emitter among the plurality of light emitters set to the emissive state based on a background luminance level in the field of view of the user.

**13.** The method according to any one of claims 8 to 12, wherein
the performing local dimming control includes switching a light emitter among the plurality of light emitters set to the non-emissive state and adjacent to a light emitter set to the emissive state to the emissive state.

**14.** A program executable by a virtual image display device including a backlight including a plurality of light emitters and a light-emitting surface configured to emit light from the plurality of light emitters, a display panel including a display surface configured to display an image with light emitted from the light-emitting surface, and an optical system configured to enlarge an image of the display surface and an image of the light-emitting surface by different enlargement factors to form a virtual image in a field of view of a user, the program causing the virtual image display device to perform operations comprising:

generating a second image by deforming a first image to be displayed on the display panel based on the enlargement factors by which the optical system enlarges the image of the display surface and the image of the light-emitting surface; and
performing local dimming control by switching each of the plurality of light emitters between an emissive state and a non-emissive state based on the second image.

**15.** The program according to claim 14, wherein
the performing local dimming control includes

dividing the second image into a plurality of local dimming areas and generating a gray level histogram for each of the plurality of local dimming areas, and
setting each of the plurality of light emitters to the emissive state or the non-emissive state based on the gray level histogram.

**16.** A program executable by a virtual image display device including a backlight including a plurality of light emitters and a light-emitting surface configured to emit light from the plurality of light emitters, a display panel including a display surface configured to display an image with light emitted from the light-emitting surface, and an optical system configured to enlarge an image of the display surface and an image of the light-emitting surface by different enlargement factors to form a virtual image in a field of view of a user, the program causing the virtual image display device to perform operations comprising:

generating a second image to be displayed on the display panel by deforming a first image based on the enlargement factors by which the optical system enlarges the image of the display surface and the image of the light-emitting surface; and
performing local dimming control by switching each of the plurality of light emitters between an emissive state and a non-emissive state based on the first image.

**17.** The program according to claim 16, wherein
the performing local dimming control includes

dividing the first image into a plurality of local dimming areas and generating a gray level histogram for each of the plurality of local dimming areas, and

setting each of the plurality of light emitters to the emissive state or the non-emissive state based on the gray level histogram.

18. The program according to any one of claims 14 to 17, wherein
the performing local dimming control includes setting an emission luminance level of a light emitter among the plurality of light emitters set to the emissive state based on a background luminance level in the field of view of the user.

19. The program according to any one of claims 14 to 18, wherein
the performing local dimming control includes switching a light emitter among the plurality of light emitters set to the non-emissive state and adjacent to a light emitter set to the emissive state to the emissive state.

FIG. 1

# FIG. 2

# FIG. 3A

## FIG. 3B

## FIG. 4

FIG. 5

FIG. 6

FIG. 7A

FIG. 7B

FIG. 8

FIG. 9

## FIG. 10

## FIG. 11

FIG. 12

EP 4 597 202 A1

## FIG. 13

```
           ( Start )
               │
┌──────────────────────────────────────┐
│        Generate first image          │  S1
└──────────────────────────────────────┘
               │
┌──────────────────────────────────────┐
│ Generate second image by deforming first image │  S2
└──────────────────────────────────────┘
               │
┌──────────────────────────────────────┐
│  Divide image into multiple local dimming areas │  S3
└──────────────────────────────────────┘
               │
┌──────────────────────────────────────┐
│       Generate gray level histogram  │  S4
└──────────────────────────────────────┘
               │
┌──────────────────────────────────────┐
│  Set emission luminance levels for light emitters │  S5
└──────────────────────────────────────┘
               │
┌──────────────────────────────────────┐
│       Detect peripheral light emitters │  S6
└──────────────────────────────────────┘
               │
┌──────────────────────────────────────┐
│   Add backlight control codes to image data │  S7
└──────────────────────────────────────┘
               │
┌──────────────────────────────────────┐
│      Drive display panel and backlight │  S8
└──────────────────────────────────────┘
               │
           ( End )
```

## FIG. 14

FIG. 15

FIG. 16

## FIG. 17

## FIG. 18

## FIG. 19

FIG. 20

FIG. 21

FIG. 22

FIG. 23

FIG. 24

FIG. 25

FIG. 26

FIG. 27

FIG. 28

## INTERNATIONAL SEARCH REPORT

International application No.

**PCT/JP2023/028198**

### A. CLASSIFICATION OF SUBJECT MATTER

*G02B 27/01*(2006.01)i; *B60K 35/00*(2006.01)i; *G02F 1/13357*(2006.01)i; *G09F 9/00*(2006.01)i
FI:  G02B27/01; G09F9/00 359; G09F9/00 336H; B60K35/00 A; G02F1/13357

According to International Patent Classification (IPC) or to both national classification and IPC

### B. FIELDS SEARCHED

Minimum documentation searched (classification system followed by classification symbols)

G02B27/01; G02F1/13357

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2019-61128 A (JAPAN DISPLAY INC.) 18 April 2019 (2019-04-18) paragraphs [0008]-[0024], fig. 1-4 | 1, 3-19 |
| X | JP 2020-112667 A (DENSO CORP.) 27 July 2020 (2020-07-27) paragraphs [0014]-[0067], fig. 1-8 | 2-5 |
| Y | paragraphs [0014]-[0067], [0086], [0087], [0099], fig. 1-8 | 1, 3-19 |
| Y | JP 2013-25247 A (SEIKO EPSON CORP.) 04 February 2013 (2013-02-04) paragraphs [0047]-[0057], fig. 5-9 | 9, 11-13, 15, 17-19 |
| Y | JP 2021-76622 A (SHARP KABUSHIKI KAISHA) 20 May 2021 (2021-05-20) paragraphs [0026]-[0036], fig. 3, 4 | 9, 11-13, 15, 17-19 |
| Y | JP 2017-107057 A (FUJIFILM CORP.) 15 June 2017 (2017-06-15) paragraph [0002] | 12, 13, 18, 19 |
| Y | WO 2020/012546 A1 (MITSUBISHI ELECTRIC CORP.) 16 January 2020 (2020-01-16) paragraphs [0022]-[0049], fig. 3-5 | 12, 13, 18, 19 |

☐ Further documents are listed in the continuation of Box C.     ☑ See patent family annex.

| | |
|---|---|
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **20 September 2023** | **10 October 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/028198**

| Patent document cited in search report | | | Publication date (day/month/year) | Patent family member(s) | Publication date (day/month/year) |
|---|---|---|---|---|---|
| JP | 2019-61128 | A | 18 April 2019 | US 2019/0094620 A1 paragraphs [0016]-[0039], fig. 1-4 | |
| JP | 2020-112667 | A | 27 July 2020 | (Family: none) | |
| JP | 2013-25247 | A | 04 February 2013 | (Family: none) | |
| JP | 2021-76622 | A | 20 May 2021 | (Family: none) | |
| JP | 2017-107057 | A | 15 June 2017 | US 2017/0168295 A1 paragraphs [0003], [0004] | |
| WO | 2020/012546 | A1 | 16 January 2020 | US 2021/0104207 A1 paragraphs [0066]-[0148], fig. 3-5 CN 112384400 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020112667 A